# EUROPEAN PATENT APPLICATION

(11) **EP 4 471 620 A1**
(43) Date of publication of application: **04.12.2024**
(21) Application number: 24179008.8
(22) Date of filing: 30.05.2024
(51) Int. Cl.: G06F 16/904, G06F 16/906

(54) **MACHINE LEARNING LIST CLASSIFICATION**

(30) Priority: 02.06.2023 US 202318328696
(71) Applicant: Apple Inc., Cupertino, CA 95014 (US)
(72) Inventor: BHULLAR, Bicrumjit S., Cupertino, 95014 (US); WANG, Dongning, Cupertino, 95014 (US)
(74) Representative: Zacco Denmark A/S

(57) **Abstract**

The present application relates to devices and components including apparatus, systems, and methods to utilize a machine-learning model for generating and/or organizing lists within an application. In some embodiments, the machine-learning model may be utilized for determining classifications for entries within the list, where the classifications can be utilized for organizing the list.

## Description

### BACKGROUND

Lists have long been utilized for organizing information. Many computer applications have utilized lists for organizing information input by users and displaying these lists to users for clarity purposes. Often the entries in the lists are organized by an order in which the entries are entered into the list or an order that the users define for the entries. Some approaches have developed that allow the computer applications to perform simple reorganization of the entries within the list, such as organizing the entries by title or due date.

### BRIEF DESCRIPTION OF THE DRAWINGS

FIG. 1 illustrates an example user interface in accordance with some embodiments.
FIG. 2 illustrates another example user interface in accordance with some embodiments.
FIG. 3 illustrates another example user interface in accordance with some embodiments.
FIG. 4 illustrates another example user interface in accordance with some embodiments.
FIG. 5 illustrates another example user interface in accordance with some embodiments.
FIG. 6 illustrates another example user interface in accordance with some embodiments.
FIG. 7 illustrates another example user interface in accordance with some embodiments.
FIG. 8 illustrates another example user interface in accordance with some embodiments.
FIG. 9 illustrates an example system arrangement in accordance with some embodiments.
FIG. 10 illustrates an example sample file in accordance with some embodiments.
FIG. 11 illustrates an example vector space representation corresponding to the sample file of FIG. 10 in accordance with some embodiments.
FIG. 12 illustrates an example procedure of utilizing a machine-learning model in accordance with some embodiments.
FIG. 13 illustrates an example UE in accordance with some embodiments.
FIG. 14 is a block diagram of an example computing device that can implement the features and processes of FIGS. 1-12 in accordance with some embodiments.
FIG. 15 illustrates an example architecture or environment configured to implement techniques described herein in accordance with some embodiments.

### DETAILED DESCRIPTION

The following detailed description refers to the accompanying drawings. The same reference numbers may be used in different drawings to identify the same or similar elements. In the following description, for purposes of explanation and not limitation, specific details are set forth such as particular structures, architectures, interfaces, techniques, etc. in order to provide a thorough understanding of the various aspects of various embodiments. However, it will be apparent to those skilled in the art having the benefit of the present disclosure that the various aspects of the various embodiments may be practiced in other examples that depart from these specific details. In certain instances, descriptions of well-known devices, circuits, and methods are omitted so as not to obscure the description of the various embodiments with unnecessary detail.

Embodiments described herein may relate to organizing entries within lists for display to users on a device. For example, the device may utilize a machine learning model to determine classifications for the entries within the lists. The device may reorganize the entries within the list based on the classifications. For example, the device can group the entries by the determined classifications and order the entries with the corresponding classifications. The device can display the list with the entries organized in accordance with the classifications. The list may include indications with which classifications each of the entries corresponds.

In some examples, the list may be displayed in an application, such as a reminders application or an application that can implement reminders. The application may automatically generate the list or may generate the list based on a user request. The list may include one or more items as entries within the list. The items may be received by the application without classifications. A machine-learning model corresponding to the list may be utilized by the application for determining classifications for the items. The application may organize the items as entries in the list by the determined classifications. The organization of the items within the list may help a user in identifying the items and/or determining where to obtain the items.

Embodiments herein may initialize the device with a global machine-learning model for classifying the items to be included in the list. The global machine-learning model may be maintained by an external entity and may be shared with multiple users as an initial machine-learning model. A copy of the global machine-learning model may be stored as an account-specific machine-learning model associated with an account corresponding to an owner of the list, such as a user account. The account-specific machine-learning model may be stored as local machine-learning models on one or more devices stored with the account. A user may make updates to classifications of items displayed within a list and one or more of the machine-learning models may learn based on the updates. For example, the local machine-learning model may be updated based on changes to classifications of items made by the user. The updates to the local machine-learning model may be promulgated to the account-specific machine-learning model causing the account-specific machine-learning model to be updated with the updates from the local machine-learning model. The updates made to the account-specific machine-learning model promulgated to other devices associated with the account to update the local machine-learning models stored on the other devices. In some embodiments, the user and/or an authorized manager of the account may select whether the updates made to the account-specific machine-learning model are to be shared with the external entity with the possibility of updating the global machine-learning model based on the updates.

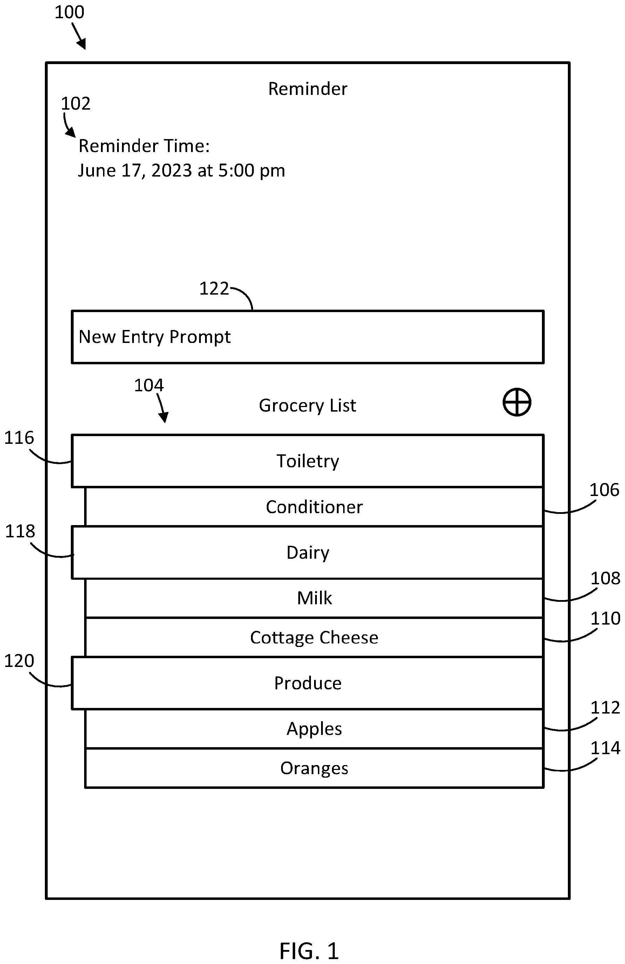

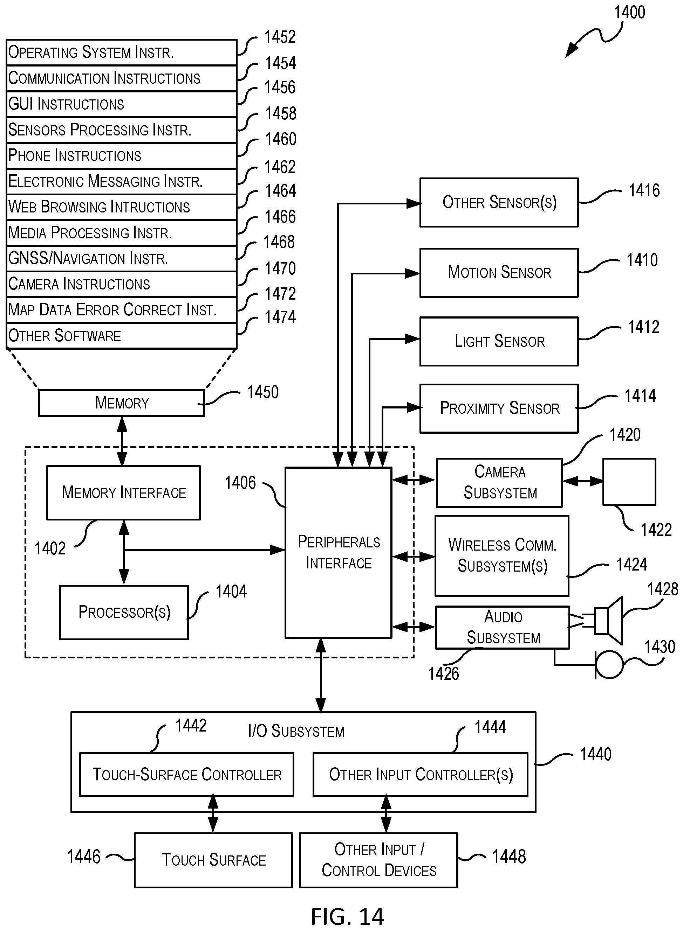

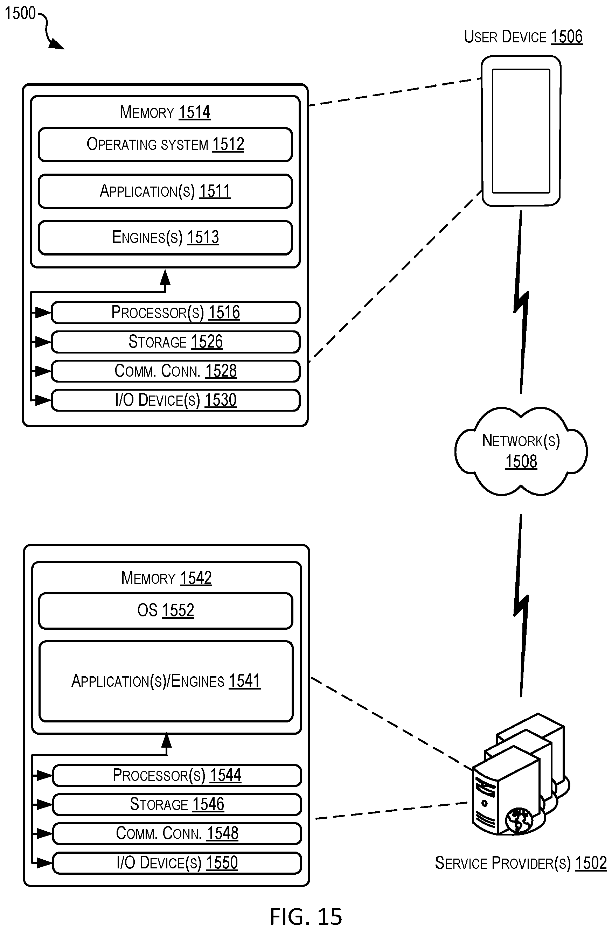

FIG. 1 illustrates an example user interface 100 in accordance with some embodiments. The user interface 100 may be displayed by an application on a device, such as the user equipment (UE) 1300, the computing device 1400 (FIG. 14), and/or the user device 1506 (FIG. 15). The application may implement machine-learning model approaches described throughout this disclosure for lists displayed within the user interface 100.

The user interface 100 illustrates a reminder in the illustrated embodiment. The reminder may be generated by a reminder application or another application that may implement reminders. The user interface 100 may include application data 102. The application data 102 may include information related to the application and/or an operation related to the application. In the illustrated embodiments, the application data 102 includes a reminder time for the reminder. For example, the application data 102 indicates a time that a reminder notification is to be presented for the reminder in the illustrated embodiment.

The user interface 100 may include a list 104. The list 104 may comprise a grocery list in the illustrated embodiment. The list 104 may have been generated utilizing a machine-learning model, as described further throughout this disclosure. In some embodiments, the list 104 may have been added to the user interface 100 based on a user request to add the list 104 to the user interface 100. For example, the device may detect a user request to add the list 104 to the user interface 100 and cause the list to be added to the user interface 100. In other embodiments, the list 104 may be automatically generated by the application presenting the user interface 100.

The list 104 may include one or more entries that represent items. For example, the list 104 includes a first entry 106, a second entry 108, a third entry 110, a fourth entry 112, and a fifth entry 114 in the illustrated embodiment. The first entry 106 may represent the item of conditioner, the second entry 108 may represent the item of milk, the third entry 110 may represent the item of cottage cheese, the fourth entry 112 may represent the item of apples, and the fifth entry 114 may represent the item of oranges in the illustrated embodiment. The entries may have been generated based on inputs from a user of the device presenting the user interface 100. For example, the device may have identified the inputs from the user and cause the entries to be presented in the user interface 100 based on the inputs.

The list 104 may include one or more classifications. For example, the list 104 includes a first classification 116, a second classification 118, and a third classification 120 in the illustrated embodiment. The first classification 116 may be toiletry, the second classification 118 may be dairy, and the third classification 120 may be produce in the illustrated embodiment. The classifications within the list 104 may be generated based on the entries within the list and/or may be generated based on user request.

The entries within the list 104 may have been classified with the corresponding classifications based on a machine-learning model. For example, the device may have a machine-learning model stored on the device. The machine-learning model may be trained to classify inputs for the list 104. The device may utilize the machine-learning model to determine a classifications for inputs to the list 104 and add the inputs to the list 104 as items with the determined corresponding classifications.

In the illustrated embodiment, the items are illustrated under the corresponding classifications within the list 104. For example, the first entry 106 for the item of conditioner is illustrated under the first classification 116 of toiletry. The second entry 108 for the item of milk and the third entry 110 for the item of cottage cheese are illustrated under the second classification 118 of dairy. The fourth entry 112 for the item of apples and the fifth entry 114 for the item of oranges are illustrated under the third classification 120 of produce. In the illustrated embodiment, the boxes around the classifications are larger than the boxes around the entries to differentiate the representations of the classifications and the entries within the list 104. While the items are shown under the corresponding classifications in the illustrated embodiment, it should be understood that the relationship between the items and the classifications may be illustrated in different ways in other embodiments, such as having a column next to the item that indicates the classification for the item. Further, while the boxes of the classifications are shown being larger than the boxes of the entries in the illustrated embodiment to signify the difference between the classifications and entries, it should be understood that other ways of indicating the classifications and entries within a list may be utilized in other embodiments, such as the classifications being shown in bold text and the entries being shown in regular text.

As can be seen from the illustrated embodiment, having the items displayed under the corresponding classifications can cause the items to be ordered by the classifications within the list 104. The ordering of the items by classification may make items easier to find within the list 104 as a user may find the corresponding classification first and then look for the item under the classification. Further, the ordering of the items by classification may help a user to find the items and/or provide for greater optimization when obtaining the items. For example, the classification may indicate a location (such as a store and/or a website) and/or a section (such as an aisle and/or other portion of a store and/or website) of a location from which the items can be obtained. As an example, when a user is looking to obtain milk (corresponding to the second entry 108 within the list 104), the user may determine that they should proceed to a dairy section of a store based on the milk being classified with the second classification 118 corresponding to dairy. Additionally, the user may determine that the cottage cheese (corresponding to the third entry 110 within the list 104) can also be obtained from the dairy section while the user is in the dairy section based on the cottage cheese being classified with the second classification 118 corresponding to dairy. Accordingly, the organization of the list 104 may help a user determine a path through a store that limits a number of times that the user has to visit each section of the store to obtain the items within the list 104.

The user interface 100 may include a new entry prompt 122. The new entry prompt 122 may provide for user input of items to be added to the list 104. In particular, a user of the device may interact with the new entry prompt 122 to provide an input value for an item to be added to the list 104. The device may determine the input value for the item to be added to the list based on the user interaction. The device may apply the machine-learning model to the input value to determine a classification for the input value. The device may add an entry to the list 104 for an item corresponding to the input value in accordance with the determined classification for the input value. The operations of classifying the input value and adding the entry to the list 104 are described further throughout this disclosure.

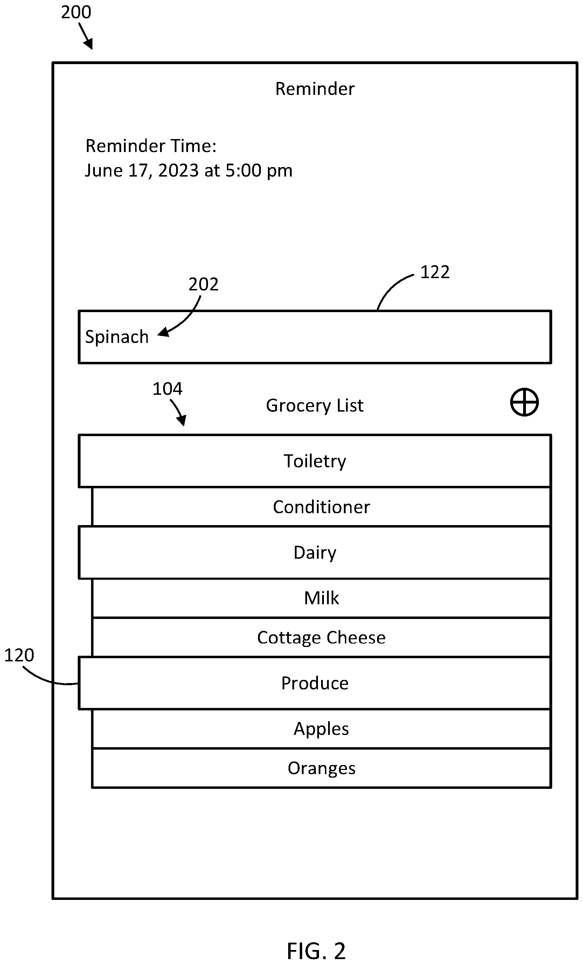

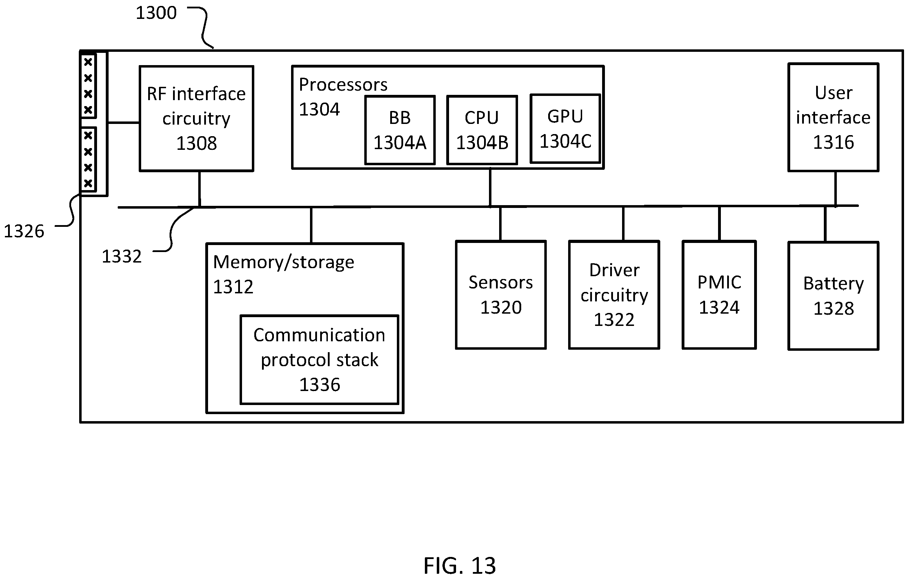

FIG. 2 illustrates another example user interface 200 in accordance with some embodiments. The user interface 200 may be displayed by an application on a device, such as the UE 1300 (FIG. 13), the computing device 1400 (FIG. 14), and/or the user device 1506 (FIG. 15). The application may implement machine-learning model approaches described throughout this disclosure for lists displayed within the user interface 200.

The user interface 200 may include one or more of the features of the user interface 100 (FIG. 1). For example, the user interface 200 may include the list 104 with the classifications and entries. Further, the user interface 200 may include the new entry prompt 122. The user interface 200 may be an example of the user interface 100 with an input value entered into the new entry prompt 122.

The user interface 200 may include an input value 202 entered into the new entry prompt 122. The input value 202 may have been entered into the new entry prompt 122 through a user interaction with the new entry prompt 122. For example, the device may identify the input value 202 entered into the new entry prompt 122 via the user interaction. The input value 202 may indicate an item to be added to the list 104. In some embodiments, the device may present suggestions for the input value 202 as the user is entering the input value into the new entry prompt 122. A user may perform some action (such as interacting with a button or other graphical representation on the user interface 200, interacting with an enter and/or carriage return element of the device, or some other action) to indicate that the input value 202 being input by the user has been completed. For example, the device may identify the action performed by the user to indicate that the input value 202 is complete and determine that the input value 202 is complete based on the identification of the action. In the illustrated embodiment, the input value 202 is shown as "Spinach" when completed.

The device may determine when the user has completed inputting the input value 202 into the new entry prompt 122. The device may utilize the machine-learning model to determine a classification for the input value 202. For example, the device may utilize the machine-learning model to determine a classification for the input value 202 of Spinach in the illustrated embodiment. The machine-learning model for determining the classification can be particular to an account associated with the device, particular to an account associated with the user, particular to the list 104, particular to a location of the device, or some combination thereof. In some embodiments, the machine-learning model may comprise a bidirectional encoder representations from transformers (BERT) model, an anchored bubble model, or a regular expression model. The device may determine that the input value 202 of Spinach is to be classified as the third classification 120 of produce based on the machine-learning model in the illustrated embodiment.

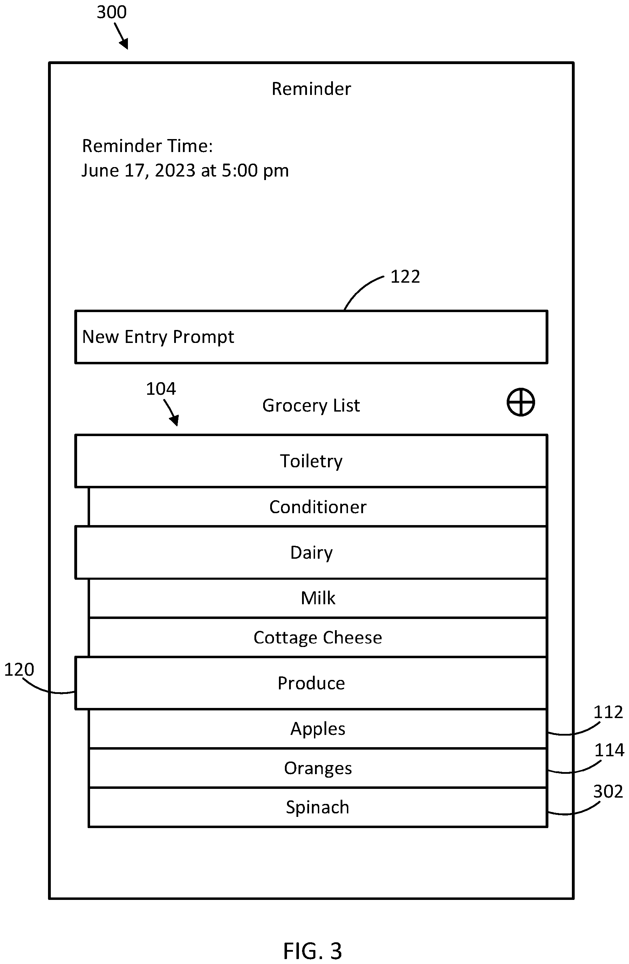

FIG. 3 illustrates another example user interface 300 in accordance with some embodiments. The user interface 300 may be displayed by an application on a device, such as the UE 1300 (FIG. 13), the computing device 1400 (FIG. 14), and/or the user device 1506 (FIG. 15). The application may implement machine-learning model approaches described throughout this disclosure for lists displayed within the user interface 300.

The user interface 300 may include one or more of the features of the user interface 100 (FIG. 1) and/or the user interface 200 (FIG. 2). For example, the user interface 300 may include the list 104 with the classifications and entries. Further, the user interface 300 may include the new entry prompt 122. The user interface 300 may be an example of the user interface 200 with an entry added to the list 104 for the input value 202 (FIG. 2) entered into the new entry prompt 122.

The user interface 200 may include a sixth entry 302 corresponding to the input value 202. For example, the device may generate the sixth entry 302 that corresponds to the input value 202 of Spinach. The device may add the sixth entry 302 to the list 104 in accordance with the determined classification for the input value 202. For example, the input value 202 of Spinach may have been determined, using the machine-learning model, to fall under the third classification 120. Accordingly, the device may add the sixth entry 302 of the item being spinach to the list 104 under the third classification 120 of produce.

In some embodiments, the sixth entry 302 may be added to the list 104 under the third classification 120 automatically based on the determination of the classification. In other embodiments, the device may seek verification (such as a user input) that the third classification 120 is a correct classification for the input value 202 prior to adding the sixth entry 302 to the list 104 under the third classification 120. If the user indicates that the third classification 120 is incorrect for the input value 202, the device may query the user for the proper classification prior to adding the sixth entry 302 to the list 104.

The user interface 300 presents the sixth entry 302 for the item of spinach under the third classification 120 of produce in the illustrated embodiment. Accordingly, the fourth entry 112 for the item of apples, the fifth entry 114 for the item of oranges, and the sixth entry 302 for the item of spinach may be located under the corresponding third classification 120 of produce. The organization of the list 104 with the fourth entry 112, the fifth entry 114, and the sixth entry 302 under the third classification 120 may indicate that apples, oranges, and spinach are classified as produce according to the machine-learning language. Having the apples, oranges, and spinach classified as produce may help the user to determine that the apples, oranges, and spinach are located within a produce section of a store.

As shown in the illustrated embodiment, the sixth entry 302 is added as a bottom entry under the third classification 120 and the order of the classifications within the list 104 remains the same. In other embodiments, the sixth entry 302 may be added in a different entry position under the third classification, such as being added as a top entry under the third classification 120 or being added in an alphabetic order within the entries under the third classification 120. In other embodiments, the classifications and corresponding entries may be displayed in a different order in the list 104 based on the entry, such as the classification with the most recently added entry and its corresponding entries being shown at the top or bottom of the list 104, and the order of the classifications within the list 104 proceeding according to how recent entries were added to the classifications. In instances where a list is longer than shown on the user interface 300 (such as when a scroll bar is utilized to scroll through the list), the user interface 300 may illustrate the portion of the list that includes the sixth entry 302 based on the sixth entry 302 being added to the list.

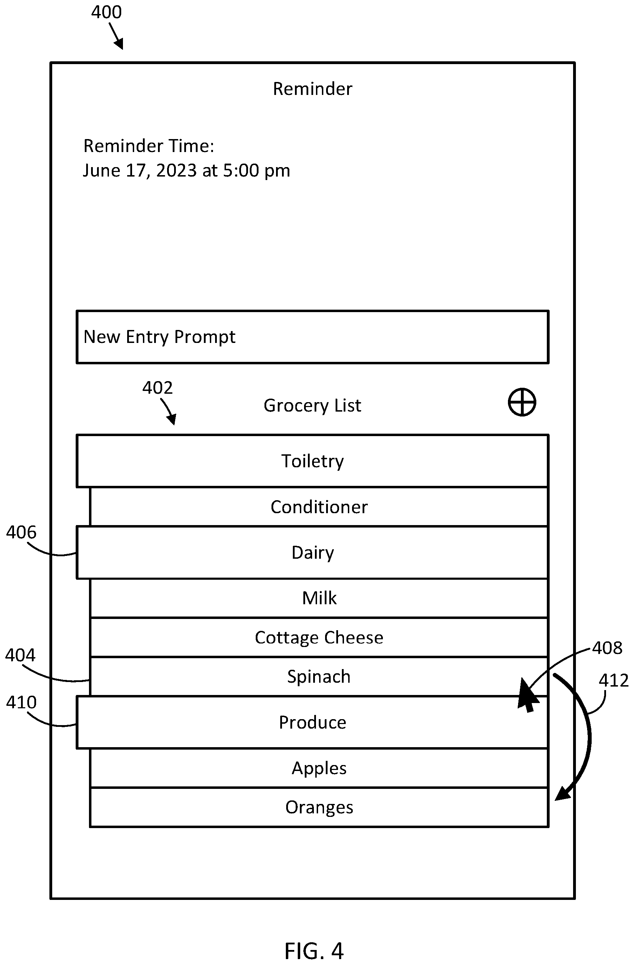

FIG. 4 illustrates another example user interface 400 in accordance with some embodiments. The user interface 400 may be displayed by an application on a device, such as the UE 1300 (FIG. 13), the computing device 1400 (FIG. 14), and/or the user device 1506 (FIG. 15). The application may implement machine-learning model approaches as described throughout this disclosure for lists displayed within the user interface 400.

The user interface 400 may include one or more of the features of the user interface 100 (FIG. 1), the user interface 200 (FIG. 2), and/or the user interface 300 (FIG. 3). For example, the user interface 400 may include a list 402. The list 402 may include one or more of the features of the list 104 (FIG. 1). The user interface 400 may illustrate an example of a correction of a classification for an entry within the list 402.

The list 402 may include an entry 404 corresponding to an item of spinach. The device may have utilized to a machine-learning model and determined that spinach was to be classified as dairy. Accordingly, the user interface 400 may display the entry 404 corresponding to the item of spinach under a first classification 406 corresponding to dairy.

A user may determine that the first classification 406 corresponding to dairy is incorrect for the item of spinach corresponding to the entry 404. The device may identify a user interaction with the user interface 400 that indicates the item of spinach being classified as the first classification 406 is incorrect. Further, the device may determine a correct classification for the item of spinach based on the user interaction or another user interaction.

In the illustrated embodiment, the user may select the entry 404, as illustrated by cursor 408 being shown pointing to the entry 404. The user may drag the selected entry 404 to a location under a second classification 410 corresponding to produce, as illustrated by arrow 412 extending from the entry 404 to a location below the second classification 410. The entry 404 being dragged from under the first classification 406 corresponding to dairy to under the second classification 410 corresponding to produce may indicate that the classification of the item of spinach as dairy is incorrect, and that the item of spinach is to be classified as produce rather than dairy. The device may identify the user selection of the entry 404 and the dragging of the selected entry 404 to the location under the second classification 410. Based on the device identifying the user selection and/or the dragging of the selected entry 404 to the location under the second classification 410, the device may determine that the item corresponding to the 404 is to be classified with the second classification 410 rather than the first classification 406.

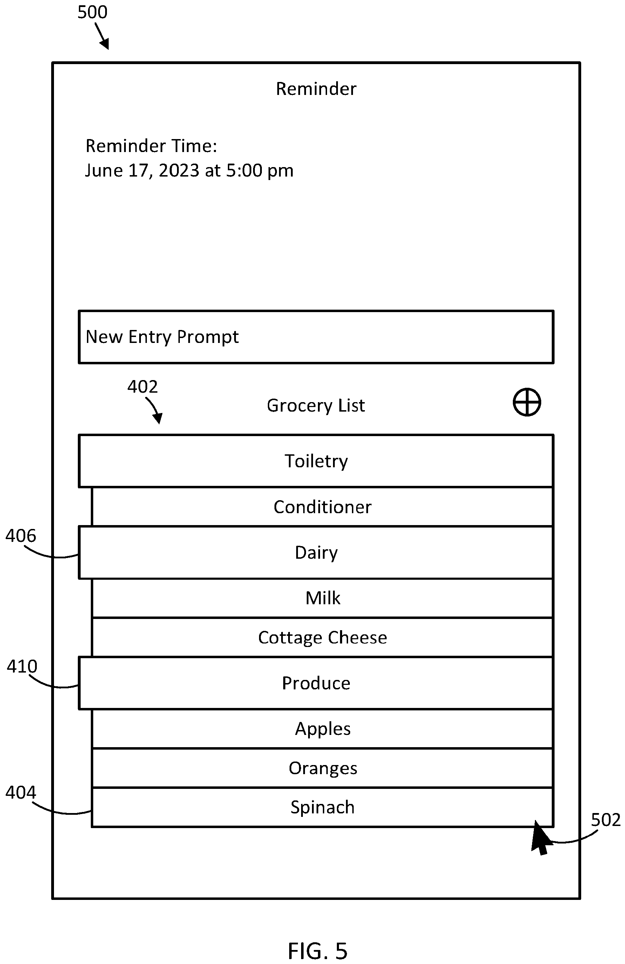

FIG. 5 illustrates another example user interface 500 in accordance with some embodiments. The user interface 500 may be displayed by an application on a device, such as the UE 1300 (FIG. 13), the computing device 1400 (FIG. 14), and/or the user device 1506 (FIG. 15). The application may implement machine-learning model approaches described throughout this disclosure for lists displayed within the user interface 500.

The user interface 500 may include one or more of the features of the user interface 400 (FIG. 4). For example, the user interface 500 may include the list 402 with the classifications and entries. The user interface 500 may be an example of the user interface 400 with the updated classification of the entry 404.

The user interface 500 may include the list 402 with the entry 404 located under the second classification 410 corresponding to produce rather than under the first classification 406 corresponding to dairy. The entry 404 may have been moved to be under the second classification 410 by a user of the device, as indicated by cursor 502 being located on the entry 404 under the second classification 410. The entry 404 being moved under the second classification 410 may indicate that the item of spinach corresponding to the entry 404 is to be classified as produce corresponding to the second classification 410. Accordingly, the device may have updated the classification of the item of spinach to be classified as produce, as shown by the entry 404 corresponding to the item of spinach being shown under the second classification 410 corresponding to produce in the user interface 500.

In addition to the location of the entry 404 being updated to being located under the second classification 410, the device may update the machine-learning model stored on the device to have spinach classified as produce. In particular, the device may update the machine-learning model stored on the device based on a user indication that a classification of an item is incorrect and/or a user indication of a correct classification of an item. In the illustrated embodiment, the user interaction indicated that the item of spinach is to be classified as produce rather than dairy. The device may update the machine-learning model stored on the device to have spinach classified as produce rather than dairy. The machine-learning model may classify any input values (such as input value 202 (FIG. 2) input into the new entry prompt 122 (FIG. 1)) of spinach as produce based on the machine-learning model being updated. Therefore, the device, using the machine-learning model, may classify the item of spinach as produce and cause the item of spinach to be displayed under the classification of produce in user interfaces based on the machine-learning model being updated.

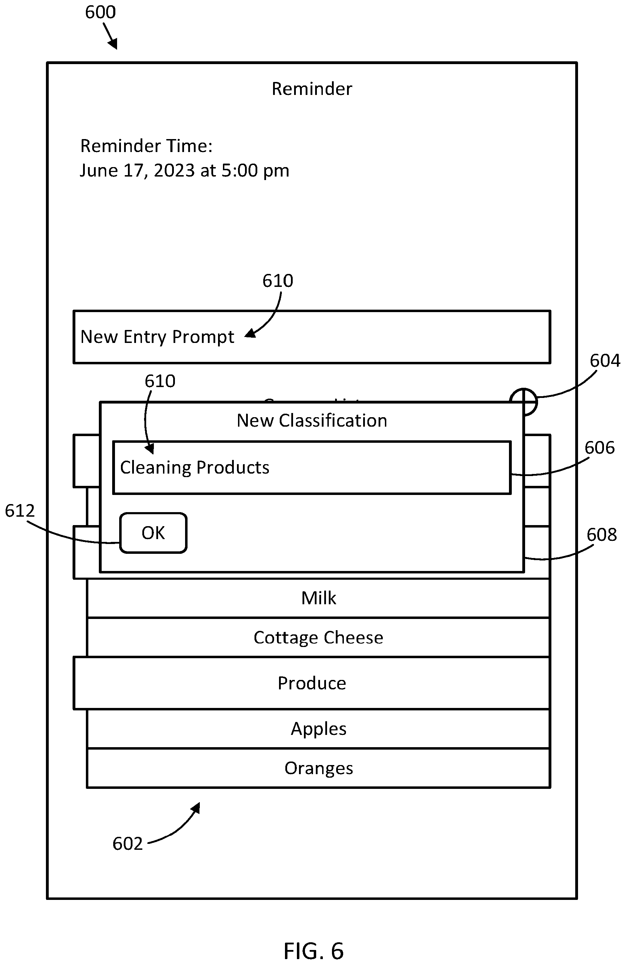

FIG. 6 illustrates another example user interface 600 in accordance with some embodiments. The user interface 600 may be displayed by an application on a device, such as the UE 1300 (FIG. 13), the computing device 1400 (FIG. 14), and/or the user device 1506 (FIG. 15). The application may implement machine-learning model approaches described throughout this disclosure for lists displayed within the user interface 600.

The user interface 600 may include one or more of the features of the user interface 100 (FIG. 1), the user interface 200 (FIG. 2), the user interface 300 (FIG. 3), the user interface 400 (FIG. 4), and/or the user interface 500 (FIG. 5). For example, the user interface 600 may include a list 602 (partially obscured in the illustrated embodiment) that includes one or more of the features of the list 104 (FIG. 1) and/or the list 402 (FIG. 4). The user interface 600 may be an example of a classification addition to the list 602 within the user interface 600.

The user interface 600 may include a classification addition icon 604. The user interface 600 may provide a user of the device an option to add a classification not currently displayed in the list 602. For example, a user may desire to add a new classification to the list 602 to reassign one of the entries within the list 602 to the new classification and/or to have an entry to be added to the list 602 be assigned to the classification. The new classification may not have been previously added to the list 602 based on the device, utilizing the machine-learning model, determining that items currently represented in the list 602 were not to be assigned to the new classification.

The user may indicate that a new classification is to be added to the list 602 by interacting with the classification addition icon 604 (such as by clicking on the classification addition icon 604) within the user interface 600. The device may identify the user interaction with the classification addition icon 604 and cause the user interface 600 to display a new classification prompt 606. For example, the new classification prompt 606 may be displayed within a new classification window 608 in the illustrated embodiment, where the new classification window 608 can be displayed over the list 602 in response to the user interaction with the classification addition icon 604.

The user can interact with the new classification prompt 606 to provide a new classification to be added to the list 602. For example, the user may have entered an input value 610 of cleaning products within the new classification prompt 606. The input value 610 of cleaning products may correspond to a classification already included in the machine-learning model or a classification not currently included in the machine-learning model. In some embodiments, the device may display suggested classifications from the classifications already included in the machine-learning model based on current text input into the new classification prompt 606 by the user, where the user may select from the suggested classifications or continue with entry of an input value into the new classification prompt 606.

The device may present a confirmation object for user interaction to indicate that the user has completed entry of the input value 610 within the new classification prompt 606. For example, the user interface 600 includes a confirmation button 612 in the illustrated embodiment. The user may interact with the confirmation button 612 to indicate that the user has completed entry of the input value 610. The device may identify the user interaction with the confirmation object and determine that the user has completed entry of the input value 610 based on the identified user interaction with the confirmation object. Further, the device may determine the input value 610 to be added as a classification to the list 602 based on the determination that the user has completed entry of the input value 610.

While the classification addition icon 604 is described as being utilized for adding classifications to the list 602 in the illustrated embodiment, it should be understood that the user interface 600 may provide other alternatives for adding classifications to a list in other embodiments. For example, the user interface 600 may display both a new entry prompt and a new classification prompt 606 on the user interface 600 without the user having to interact with the user interface to cause the new classification prompt 606 to be displayed in other embodiments.

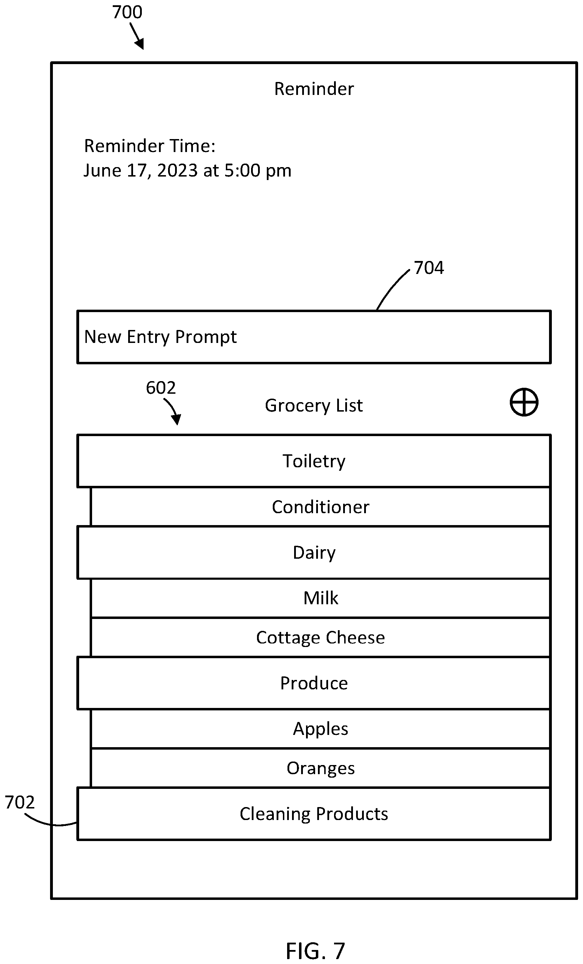

FIG. 7 illustrates another example user interface 700 in accordance with some embodiments. The user interface 700 may be displayed by an application on a device, such as the UE 1300 (FIG. 13), the computing device 1400 (FIG. 14), and/or the user device 1506 (FIG. 15). The application may implement machine-learning model approaches described throughout this disclosure for lists displayed within the user interface 700.

The user interface 700 may include one or more of the features of the user interface 600 (FIG. 6). For example, the user interface 700 may include the list 602 with the classifications and entries. The user interface 700 may be an example of the user interface 600 (FIG. 6) with the new classification from the new classification prompt 606 added to the list 602.

The user interface 700 may include a classification 702 corresponding to the input value 610. For example, the device may have added the classification 702 corresponding to the input value 610 to the list 602 based on a determination, by the device, that the user interacted with the confirmation object (for example, the confirmation button 612). The device may determine the input value 610 entered into the new classification prompt 606, which is cleaning products in the illustrated instance. The device may add the classification 702 with the title of cleaning products to the list 602. The device may add the classification 702 at a bottom of the list 602, at a top of the list 602, in location corresponding to an alphabetic order of the classifications within the list 602, or some other defined location within the list 602.

In the instance where the classification corresponding to the input value 610 is already included in the machine-learning model, the device may utilize the machine-learning model to assign the classification to corresponding new input values (such as the input value 202) and display the entries corresponding to the input values under the classification. For example, the user interface 700 may receive input values via a new entry prompt 704 of the user interface 700. The device may identify the input values from the new entry prompt 704 and perform classifications of the input values. In the instance where the device classifies the input values with the cleaning products classification using the machine-learning language, the device may add an entry for the item corresponding to the input value under the classification 702.

In the instance where the classification corresponding to the input value 610 is not included in the machine-learning model, the device may utilize items defined by a user as being classified as cleaning products to train the machine-learning model. For example, the user interface 700 may receive input values via the new entry prompt 704 of the user interface. The device may identify the input values and utilize the machine-learning model to classify the input values. As the machine-learning model has not been trained for the cleaning products, the device may determine the classification of the input values as classifications that had been previously trained for the machine-learning model. The device may cause the entries corresponding to the input values to be included in the list under the classifications determined based on the machine-learning model. The user may then indicate to the device that one or more of the entries are to be classified as cleaning products, such as by the procedure described in relation to the user interface 400 (FIG. 4) and the user interface 500 (FIG. 5). The device may identify the indication from the user to classify the indicated entries as cleaning products and present the indicated entries under the classification 702 corresponding to cleaning products. The device may further update the machine-learning model to classify items corresponding to the indicated entries with the cleaning products classification based on the indication from the user. Accordingly, the machine-learning model may classify input values corresponding to the items within the trained cleaning products classification as cleaning products.

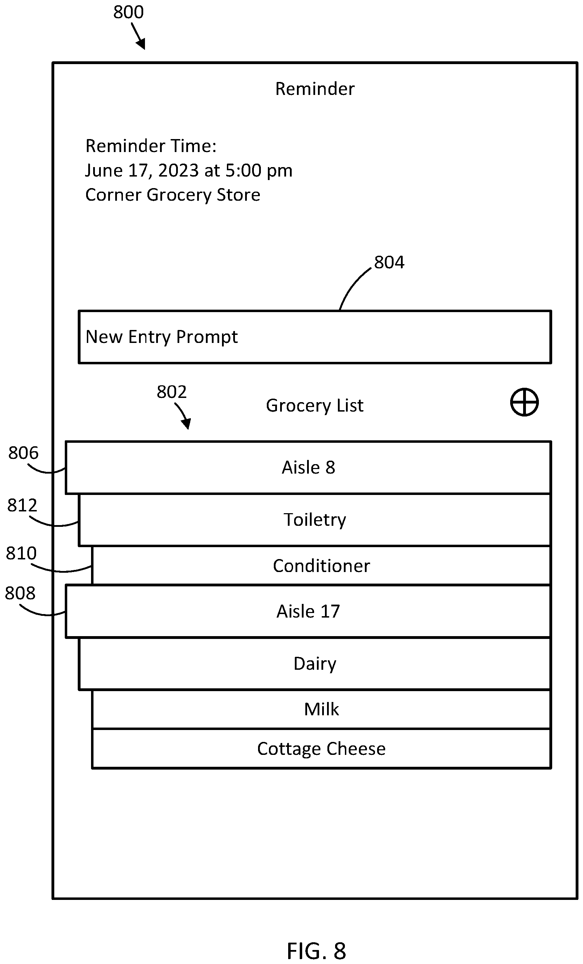

FIG. 8 illustrates another example user interface 800 in accordance with some embodiments. The user interface 800 may be displayed by an application on a device, such as the UE 1300 (FIG. 13), the computing device 1400 (FIG. 14), and/or the user device 1506 (FIG. 15). The application may implement machine-learning model approaches described throughout this disclosure for lists displayed within the user interface 800.

The user interface 800 may include one or more of the features of the user interface 100 (FIG. 1), the user interface 200 (FIG. 2), the user interface 300 (FIG. 3), the user interface 400 (FIG. 4), the user interface 500 (FIG. 5), the user interface 600 (FIG. 6), and/or the user interface 700 (FIG. 7). For example, the user interface 800 may include the list 802 with classifications and entries. Further, the user interface 800 may include a new entry prompt 804. The user interface 800 may be an example of a user interface that includes groupings for the classifications and/or entries within the list 802. For example, the user interface 800 illustrates an example embodiment where the system may utilize groupings to indicate where items within the list 802 can be acquired.

The user interface 800 may include groupings in addition to the classifications and/or entries within the list 802. For example, the list 802 includes a first grouping 806 and a second grouping 808 in the illustrated embodiment. The groupings may indicate locations where goods corresponding to items represented within the list 802 may be obtained. In some embodiments, the groupings may correspond to sections of a location or locations where the corresponding goods can be acquired. The indication of the grouping for an entry may indicate a section of a location where an item corresponding to the entry can be acquired. The user may be able to determine where to acquire items represented within the list.

In embodiments where the groupings indicate a section of a location, the list 802 may be specific to a location and/or may be updated based on a location. In these embodiments, a location corresponding to the groupings may be displayed within the user interface such that a user can identify the location to acquire the items based on the indication of the location and a section of the location from which the items can be acquired based on the groupings. In the illustrated embodiment, the user interface 800 may include application data 814. The application data 814 may include an indication of the location. For example, the application data 814 indicates a location of "Corner Grocery Store."

In some instances, the list 802 may be generated for the specific location, where a machine-learning model may correspond to the particular location. In these embodiments, the device may utilize the machine-learning model corresponding to the location in determining the classification for an input value and/or a grouping for the input value. Upon entry of a new input value, the device may determine the input value and generate a new entry for the list 802 in accordance with a classification and/or a grouping determined using a machine-learning model corresponding to the location. In these instances, a user may define what location (such as a store) at which the user plans to obtain items within the list 802 and the list 802 can indicate the groupings and/or classifications based on the location indicated by the user.

In some instances, the list 802 may be updated as a location corresponding to the list changes. For example, the list 802 may not be tied to a particular location. The device may be able to update the list based on a location. The list 802 may be initialized with an initial location. The device may determine the initial location based on an input from a user and/or a predefined initial location. The device may determine to update a location based on an input from a user or another procedure for updating the location, such as determining a current location of the device (including geolocation determination of a location). One of the more of the locations may have a corresponding machine-learning model. As the location is changed, the device may update the groupings and/or classifications within the list 802 for the entries based on the machine-learning model corresponding to the new location. In some embodiments, the machine-learning models for the location may have the same classifications, although the groupings may differ based on the location. In some embodiments, the device may utilize a first machine-learning model for determining the classifications and a second machine-learning model for determining the groupings, where the first machine-learning model may not be updated based on a change to the location and the second machine-learning model may be updated based on a change to the location. In these instances, the device may update the groupings and/or the classifications for entries within the list 802 as user selects a different location (such as a store) from which to obtain the items and/or proceeds to a different location to obtain the items.

In some embodiments, the groupings may be determined based on information obtained by the device rather than utilizing a machine-learning model for the groupings. For example, a location (such as a store) may maintain groupings of items (for example, locations of items within the location) on a computing device (such as a server). The device may obtain the groupings of the items from the computing device and assign the groupings to the entries within the list 802 based on the groupings obtained from the computing device. The device may still utilize a machine-learning model to determine the classifications for the entries within the list 802. Accordingly, the device may include classifications determined based on the machine-learning model and groupings determined based on grouping retrieved from the computing device, where the entries are displayed under the classifications and groupings accordingly.

The list 802 may include one or more entries that can be associated with the groupings. For example, the list 802 includes a first entry 810 for the item of conditioner. The first entry 810 is located under the first grouping 806 indicating that the item of conditioner is associated with the first grouping 806. Accordingly, a user may be able to determine that the item of conditioner can be acquired at the section of the location corresponding to the first grouping 806 based on the first entry 810 being associated with the first grouping 806.

The list 802 may further include one or more classifications that can be associated with one or more groupings. For example, different items classified with a classification may be associated with different groupings in some instances. In these instances, a classification may be displayed under each grouping with which an item having the classification is associated. In the illustrated embodiment, the list 802 includes a first classification 812 of toiletry. Further, the first entry 810 for the item of conditioner has been classified as toiletry in the illustrated embodiment and is displayed under the first classification 812 of toiletry. The first entry 810 is further associated with the first grouping 806 in the illustrated embodiment. The first entry 810 and the first classification 812 are displayed under the first grouping 806 in the illustrated embodiment based on the item of the first entry 810 being classified with the first classification 812 and being associated with the first grouping 806. Accordingly, based on the entries being displayed under the corresponding groupings and classifications in the illustrated embodiment, a user may be able to determine a corresponding classification, location, and/or section of a location from which to obtain items corresponding to the entries within the list 802.

In some instances where the device utilizes a machine-learning model to determine the groupings, the device may identify requests to add groupings to a list and/or update the groupings for entries within a list. For example, the device may present an option to add groupings similar to the option of adding classifications as described in relation to the user interface 600 (FIG. 6) and the user interface 700 (FIG. 7). Further, the device may receive an indication that a grouping for an item corresponding to an entry is to be corrected and update the machine-learning model with the corrected grouping for the item, similar to the approach for correcting the classifications for items described in relation to the user interface 400 (FIG. 4) and the user interface 500 (FIG. 5). The device may update the machine-learning model based on the added groupings and/or the updated groupings for entries.

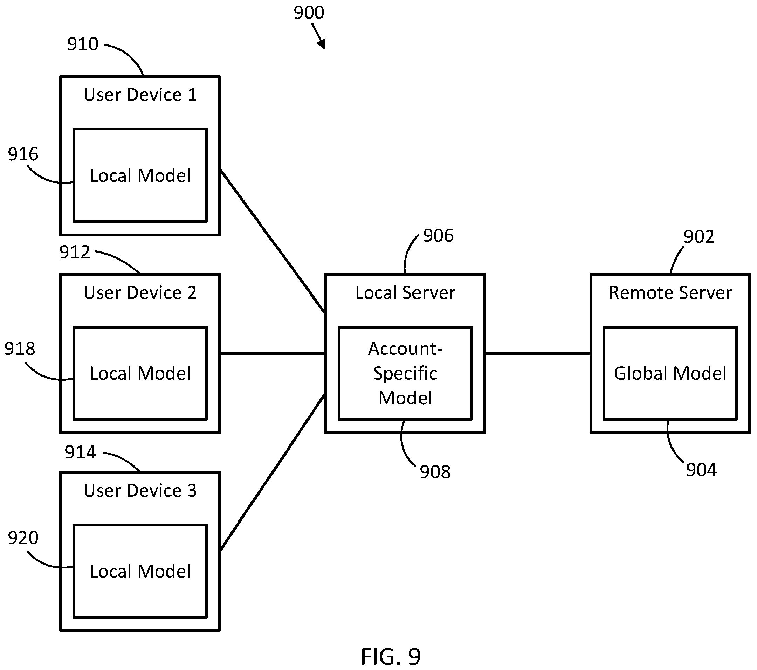

FIG. 9 illustrates an example system arrangement 900 in accordance with some embodiments. For example, the system arrangement 900 illustrates an example system that may implement the approaches of utilizing a machine-learning model to generate and/or organize a list, as described throughout this disclosure.

The system arrangement 900 may include a remote server 902. The remote server 902 may include one or more of the features of service provider computer 1502 (FIG. 15). The remote server 902 may include a server and/or another computing device. The remote server 902 may be maintained by a first entity. The first entity may be a service provider that can provide service for applications operated by devices and/or the devices. The remote server 902 may store a global model 904. The global model 904 may be a global machine-learning model that has been generated by the first entity. The global model 904 may not have been trained according to a specific user, but has been trained with a training set and/or on inputs received from multiple users. The global model 904 may be shared with one or more other entities in some embodiments.

The system arrangement 900 may include a local server 906. The local server 906 may include one or more of the features of the service provider computer 1502 (FIG. 15). The local server 906 may be maintained by a second entity, such as by a company that utilizes the application and/or user or group of users (such as a family unit) that utilize the application. The local server 906 may be associated with one or more accounts. The local server 906 may store one or more machine-learning models that can be utilized for the classification and/or grouping of items within a list. Each of the machine-learning models can be associated with one or more accounts. For example, the local server 906 may store an account-specific model 908. The account-specific model 908 may be a machine-learning model that has been trained for a specific account maintained by the local server 906. For example, the local server 906 may have obtained a copy of the global model 904 from the remote server 902. The local server 906 may maintain the account-specific model 908 as is or update the account-specific model 908 based on inputs associated an account corresponding to the account-specific model 908. In some embodiments, the local server 906 may store multiple account-specific models where each of the one or more account-specific models correspond to one or more lists to be generated in accordance with the account.

In some embodiments, a user and/or administrator of the local server 906 and/or an account maintained by the local server 906 may select whether updates to the account-specific models are to be shared with the remote server 902. The local server 906 may determine whether a user and/or administrator for each account has authorized sharing of account-specific models with the remote server 902 and which of the account-specific models are authorized to be shared with the remote server 902. The remote server 902 may receive the account-specific models and/or the updates made to the account-specific models from the local server 906. The remote server 902 may determine whether to update the global model 904 based on the received account-specific models and/or the updates made to the account-specific models. The remote server 902 may update the global model 904 based on the received account-specific models and/or the updates made to the account-specific models if the remote server 902 determines that the global model 904 is to be updated.

The system arrangement 900 may include one or more user devices. For example, the system arrangement 900 includes a first user device 910, a second user device 912, and a third user device 914 in the illustrated embodiment. The user devices may include one or more features of the UE 1300 (FIG. 13), the computing device 1400 (FIG. 14), and/or the user device 1506 (FIG. 15). The user devices may establish connections with the local server 906. Each of the user devices may be associated with one or more accounts. One or more accounts of the user devices may be an account associated with the account-specific model 908 and/or an account authorized to receive the account-specific model 908. Each of the user devices may receive copies of the account-specific model 908 from the local server 906 and may store the copies as local models. For example, the first user device 910 may store a first local model 916, the second user device 912 may store a second local model 918, and the third user device 914 may store a third local model 920, where each of the local models may be copies of the account-specific models. The local models may be machine-learning models that can be utilized for classifying and/or grouping entries within a list, as described throughout this disclosure. In some embodiments, each of the user devices may store one or more local models, where each of the stored local models may correspond to one or more lists and/or one or more locations corresponding to lists. The user device may determine a local model from the one or more local models to be utilized for a list and/or a location corresponding to the list.

The user devices may execute one or more applications that can generate lists as described throughout this disclosure. For example, the user devices may display user interfaces with lists, such as the user interface 100 (FIG. 1), the user interface 200 (FIG. 2), the user interface 300 (FIG. 3), the user interface 400 (FIG. 4), the user interface 500 (FIG. 5), the user interface 600 (FIG. 6), the user interface 700 (FIG. 7), and/or the user interface 800 (FIG. 8). Further, the user devices may perform one or more operations related to the machine-learning models and/or lists described throughout this disclosure. For brevity, operations performed by the user devices with relation to the local models is described below in relation to the first user device 910. However, it should be understood that the other user devices (including the second user device 912 and/or the third user device 914) may perform one or more of the same operations related to the corresponding local models as the first user device 910 performs related to the first local model 916.

The first user device 910 may generate and display a list, such as the list 104 (FIG. 1), the list 402 (FIG. 4), the list 602 (FIG. 6), and/or the list 802 (FIG. 8). The first user device 910 may utilize the first local model 916 to determine classifications and/or groupings for input values to be added as entries to the list. Further, the first user device 910 may utilize the classifications and/or groupings determined utilizing the first local model 916 in organizing entries within the list. The first user device 910 may display the list with the organized entries to the user.

In some instances, the first user device 910 may identify an indication that a classification and/or grouping is to be corrected for items corresponding to entries within the list. For example, the first user device 910 may identify an indication of a correction of an entry as described in relation to the user interface 400 and the user interface 500. The first user device 910 may determine to update the first local model 916 based on the indicated correction. For example, the first user device 910 may update the first local model 916 to reflect the correction of the classification and/or grouping for the item. In some instances, the first user device 910 may identify a classification and/or grouping to be added to a list. For example, the first user device 910 may identify a classification and/or grouping to be added as described in relation to the user interface 600 and the user interface 700. The first user device 910 may determine to update the first local model 916 to include the added classification and/or grouping.

In instances where the first user device 910 updates the first local model 916, the first user device 910 may provide an indication of the update and/or the first local model 916 to the local server 906 to update the account-specific model 908. For example, the first user device 910 may provide the indication of the update and/or the first local model 916 to the local server 906 when the update occurs, when the first user device 910 establishes a connection with the local server 906, in response to a trigger to provide the indication and/or the first local model 916, at set interval, or some combination thereof. The local server 906 may receive the indication and/or the first local model 916 and may update the account-specific model 908.

In instances where the local server 906 updates the account-specific model 908, the local server 906 may provide copies of the updated account-specific model 908 to the user devices. For example, the local server 906 may receive the updated first local model 916 from the first user device 910 to update the account-specific model 908, and may provide copies of the updated account-specific model 908 to the second user device 912 to be stored as the second local model 918 and to the third user device 914 to be stored as the third local model 920. Providing the updated account-specific model to the user devices can verify that the user devices utilize a most up-to-date machine-learning model in classifying and/or grouping entries within a list.

In some embodiments, the user devices may share lists generated using machine-learning models. For example, a single list may be shared between the first user device 910 and the second user device 912. Accordingly, users of the first user device 910 and the second user device 912 may both contribute entries to the list, and may be able to share the list with the other user device. As the first local model 916 and the second local model 918 may be updated to match each other, the classifications and/or groupings within the list may match whether added by the first user device 910 or the second user device 912. The sharing of lists may allow multiple users to generate a combined list and a single user to act upon the shared list or a portion of the shared list, which can be beneficial for the users. For example, the list may be a grocery list for a family where multiple members of the family may add to the list, but one member of the family goes to the grocery store to obtain items within the list. In other instances, the list may include items that are to be obtained from different locations where a first user may go to a first location to obtain items within the list from the first location and a second user may go to a second location to obtain items within the list from the second location. Accordingly, the shared list may provide for efficient obtainment of items within the list.

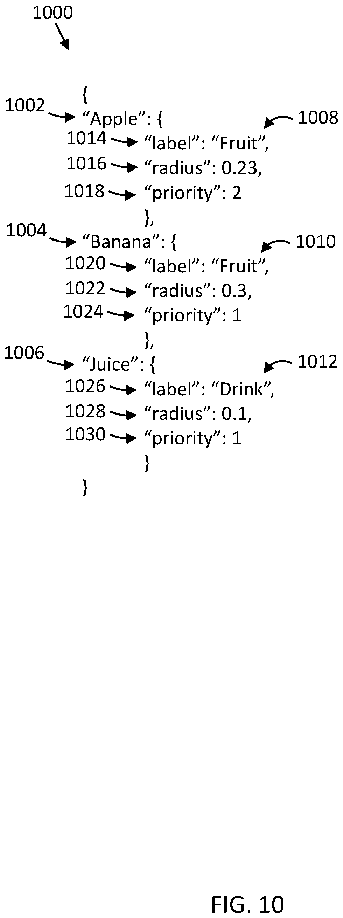

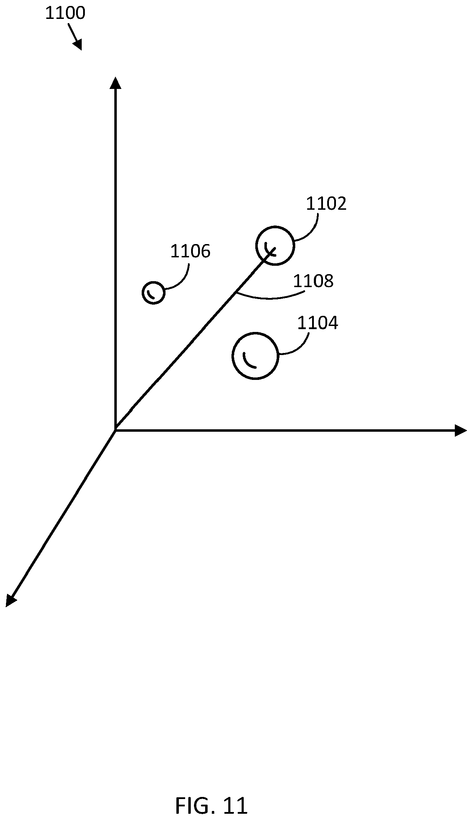

FIG. 10 illustrates an example sample file 1000 in accordance with some embodiments. For example, sample file 1000 may be a sample file for an anchored bubble model. As mentioned, the machine learning model utilized for generating and/or organizing the lists described throughout this disclosure may be an anchored bubble model in some embodiments. FIG. 11 illustrates an example vector space representation 1100 corresponding to the sample file 1000 of FIG. 10 in accordance with some embodiments.

The sample file 1000 may include one or more samples for training an anchored bubble model. In the illustrated embodiment, the sample file 1000 includes a first sample 1002, a second sample 1004, and a third sample 1006. The first sample 1002 may correspond to an item of an apple, the second sample 1004 may correspond to an item of a banana, and the third sample 1006 may correspond to an item of juice.

Each of the samples within the sample file 1000 may have corresponding model information for generating the anchored bubble model in the vector space. For example, the first sample 1002 may have first model information 1008, the second sample 1004 may have second model information 1010, and the third sample 1006 may include third model information 1012. Each of the model information may include a classification, a radius for a bubble to be generated in the vector space, and a priority. For the example, the first model information 1008 for the first sample 1002 may include a classification 1014 of fruit, a radius 1016 of 0.23, and a priority 1018 of 2. The second model information 1010 for the second sample 1004 may include a classification 1020 of fruit, a radius 1022 of 0.3, and a priority 1024 of 1. The third model information 1012 for the third sample 1006 may include a classification 1026 of drink, a radius 1028 of 0.1, and a priority 1030 of 1.

Circles or spheres may be generated within the vector space for each of the samples to produce the anchored bubble model. For example, a circle or a sphere may be generated in the vector space for each sample. The circle or the sphere may be generated in accordance with the corresponding model information. For example, the device generating the anchored bubble model may utilize a word2vec operation (or other operation that converts words into the vector space) to convert the text of the sample to the vector space. The device may treat the vector location of the converted text as a center for the circle or sphere. The device may produce the circle or sphere with a radius from the center corresponding to the converted text. The device may associate the corresponding classification and priority with the generated circle or sphere.

As an example, for the first sample 1002 the device may use word2vec to convert the text "apple" to the vector space. The device may treat the resultant vector from converting the text "apple" as a center of a corresponding sphere. The device may generate a first sphere 1102 at the radius 1016 around the resultant vector from converting the text "apple." The device may associate the classification 1014 of fruit and the priority 1018 of 2 with the first sphere. The device may further generate a second sphere 1104 corresponding to the second sample 1004 having the radius 1022 of 0.3, and being associated with the classification 1020 of fruit and the priority 1024 of 1. The device may further generate a third sphere 1106 corresponding to the third sample 1006 having the radius 1028 of 0.1, and being associated with the classification 1026 of fruit and the priority 1030 of 1. In generating the spheres or circles, the device may verify that spheres or circles of the same radius do not overlap within the vector space.

A device may utilize the generated anchored bubble model to classify and/or assign groupings to input values (such as the input value 202 (FIG. 2)). The device that utilizes the anchored bubble model for classifying and/or assigning the groupings may be a user device (such as the first user device 910 (FIG. 9), the second user device 912 (FIG. 9), and/or the third user device 914 (FIG. 9)). The device may tokenize the text of the input values and separate the text into individual words. The device may filter the individual words from the input values to remove words that are not nouns or verbs, thereby leaving nouns and/or verbs from the input values for further processing. The device may utilize word2vec operations to convert the noun and/or verbs into the vector space, thereby producing vectors corresponding to the input value. The device may compare the vectors with the spheres or circles within the vector space to determine which sphere/circle or spheres/circles in which the vector or vectors are located. In the instance that the vectors are within a single sphere or circle, the device may classify the input value with the classification corresponding to the sphere or circle, and/or may assign the input value with the grouping corresponding to the sphere or circle. In the instance that the vectors are within more than one sphere or circle, the device may determine the sphere or circle where the vectors are located that have a highest priority. Further, the device may classify the input value with the classification corresponding to the sphere or circle with the highest priority, and/or may assign the input value with the grouping corresponding to the sphere or the circle with the highest priority.

As an example, the device may have generated a vector 1108 corresponding to an input value in the illustrated embodiment. The device may determine that the vector 1108 falls within the first sphere 1102, such as by the vector 1108 ending within the first sphere 1102. As the first sphere 1102 corresponds to the first sample 1002, the first sphere 1102 may be associated with the classification 1014 of fruit. The device may determine that the input value corresponding to the vector 1108 is to be classified as fruit based on the vector 1108 falling with the first sphere 1102 and the first sphere 1102 being associated with the classification 1014 of fruit. The device may cause an entry corresponding to the input value to be added to a list, the entry being indicated with the classification (such as the entry being organized under the classification) of fruit within the list.

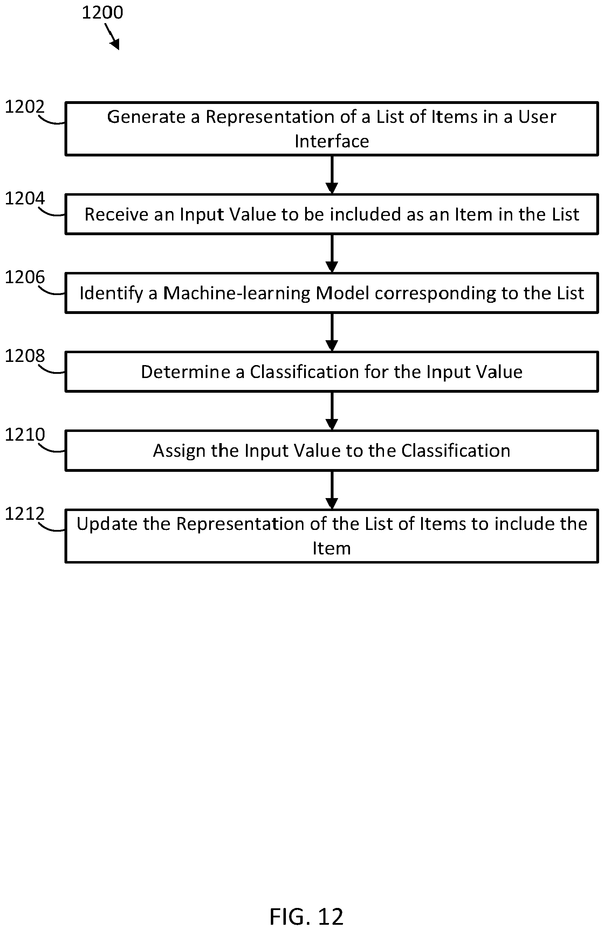

FIG. 12 illustrates an example procedure 1200 of utilizing a machine-learning model in accordance with some embodiments. For example, the procedure 1200 may be performed to generate a list within an application, the list generated using a machine-learning model for classifying and/or assigning groupings to entries within the list. The entries within the list may be organized based on the classifications and/or the assigned groupings. The procedure 1200 may be performed by a device, such as the first user device 910 (FIG. 9), the second user device 912 (FIG. 9), the third user device 914 (FIG. 9), the UE 1300 (FIG. 13), the computing device 1400 (FIG. 14), and/or the user device 1506 (FIG. 15).

In 1202, the procedure 1200 may include generating a representation of a list of items in a user interface. For example, the device may generate a representation of a list of items in a user interface for displaying the list within an application on the device. The list generated may have one or more features of the list 104 (FIG. 1), the list 402 (FIG. 4), the list 602 (FIG. 6), and/or the list 802 (FIG. 8).

In 1204, the procedure 1200 may include receiving an input value to be included as an item in the list. For example, the device may receive an input value (such as the input value 202 (FIG. 2) to be included as an item in the list.

In 1206, the procedure 1200 may include identifying a machine-learning model corresponding to the list. For example, the device may identify a machine-learning model corresponding to the list from one or more machine-learning models for one or more lists. In some embodiments, the machine-learning model may be associated with a first user account. The machine-learning model may include one or more of the features of the first local model 916 (FIG. 9), the second local model 918 (FIG. 9), the third local model 920 (FIG. 9), and/or the anchored bubble model described in relation to sample file 1000 (FIG. 10) and the vector space representation 1100 (FIG. 11).

In 1208, the procedure 1200 may include determining a classification for the input value. For example, the device may determine, using the identified machine-learning model, a classification for the input value. In some embodiments, the classification may be a first classification. The classification may be determined in accordance with any of the approaches for determining a classification as described throughout this disclosure.

In some embodiments, determining the classification for the input value may include determining, using the identified machine-learning model, a possible classification for the input value. The device may present, in the user interface, the possible classification for the input value. The device may receive, via the user interface, an input associated with the item. Further, the device may determine whether the input associated with the item is an acceptance of the possible classification for the item or an assignment of a different classification for the item. In accordance with a determination that the input associated with the item is acceptance of the possible classifications, the device may determine that the classification is the possible classification. In accordance with a determination that the input associated with the item is the assignment of the different classification, the device may determine that the classification is the different classification.

In some embodiments, determining the classification for the input value may include tokenizing the input value into one or more words. The device may filter the one or more words to one or more nouns or verbs. The device may vectorize the one or more nouns or verbs to produce one or more vectors corresponding to the input value. The device may compare the one or more vectors with spheres corresponding to one or more classifications with a vector space to determine the classification.

In some embodiments, determining the classification for the input value may further include determining that a first portion of the one or more vectors correspond to a first sphere corresponding to a first classification based at least in part on the comparison of the one or more vectors with the spheres. The device may further determine that a second portion of the one or more vectors correspond to a second sphere corresponding to a second classification based at least in part on the comparison of the one or more vectors with the spheres. Further, the device may determine a first priority assigned to the first sphere and a second priority assigned to the second sphere. The device may determine that the classification for the input value is the first classification based at least in part on the first priority and the second priority.

In 1210, the procedure 1200 may include assigning the input value to the classification. For example, the device may assign the input value to the classification within the application, the classification being determined in 1208.

In 1212, the procedure 1200 may include updating the representation of the list of items to include the item. For example, the device may update the representation of the list of items to include the item corresponding to the input value in the list.

In some embodiments, the procedure 1200 may include presenting, within the user interface, the item in a section of the list corresponding to the classification based at least in part on the input value being assigned to the classification. For example, an entry for the item may be presented under the classification within the list, as described throughout this disclosure.

In some embodiments, the procedure 1200 may include identifying a user input that reassigns the item from the first classification to the second classification. The device may further update the machine-learning model to have the item assigned to the second classification. For example, the operation of reassigning the item from the first classification to the second classification may be performed as described in relation to the user interface 400 (FIG. 4) and the user interface 500 (FIG. 5). In some of these embodiments, the device may provide at least a portion of the machine-learning model to a remote device to update a corresponding account-specific machine-learning model stored on the remote device. The corresponding account-specific machine-learning model stored on the remote device to be utilized for updating machine-learning models on one or more devices associated with a user account corresponding to the account-specific machine-learning model. The providing of the machine-learning model and associated operations may be performed as described in relation to the system arrangement 900 (FIG. 9).

In some embodiments, the procedure 1200 may include identifying an indication to share the machine-learning model with a second user account. The device may provide an indication to a remote device to share the machine-learning model with the second user account.

In some embodiments, the procedure 1200 may include determining a grouping for the input value using the machine-learning model. The grouping may indicate a location where a good corresponding to the item can be obtained. The device may present, in the user interface, the item with an indication of the grouping based at least in part on the determination of the grouping. In some of these embodiments, the grouping may correspond to a section of the location and the indication of the grouping may include an indication of the section of the location. For example, the groupings may be determined and/or displayed as described in accordance with the user interface 800 (FIG. 8).

FIG. 13 illustrates an example UE 1300 in accordance with some embodiments. The UE 1300 may be any mobile or non-mobile computing device, such as, for example, mobile phones, computers, tablets, industrial wireless sensors (for example, microphones, carbon dioxide sensors, pressure sensors, humidity sensors, thermometers, motion sensors, accelerometers, laser scanners, fluid level sensors, inventory sensors, electric voltage/current meters, actuators, etc.), video surveillance/monitoring devices (for example, cameras, video cameras, etc.), wearable devices (for example, a smart watch), relaxed-IoT devices. In some embodiments, the UE 1300 may be a RedCap UE or NR-Light UE.

The UE 1300 may include processors 1304, RF interface circuitry 1308, memory/storage 1312, user interface 1316, sensors 1320, driver circuitry 1322, power management integrated circuit (PMIC) 1324, antenna structure 1326, and battery 1328. The components of the UE 1300 may be implemented as integrated circuits (ICs), portions thereof, discrete electronic devices, or other modules, logic, hardware, software, firmware, or a combination thereof. The block diagram of FIG. 13 is intended to show a high-level view of some of the components of the UE 1300. However, some of the components shown may be omitted, additional components may be present, and different arrangement of the components shown may occur in other implementations.

The components of the UE 1300 may be coupled with various other components over one or more interconnects 1332, which may represent any type of interface, input/output, bus (local, system, or expansion), transmission line, trace, optical connection, etc. that allows various circuit components (on common or different chips or chipsets) to interact with one another.

The processors 1304 may include processor circuitry such as, for example, baseband processor circuitry (BB) 1304A, central processor unit circuitry (CPU) 1304B, and graphics processor unit circuitry (GPU) 1304C. The processors 1304 may include any type of circuitry or processor circuitry that executes or otherwise operates computer-executable instructions, such as program code, software modules, or functional processes from memory/storage 1312 to cause the UE 1300 to perform operations as described herein.

In some embodiments, the baseband processor circuitry 1304A may access a communication protocol stack 1336 in the memory/storage 1312 to communicate over a 3GPP compatible network. In general, the baseband processor circuitry 1304A may access the communication protocol stack to: perform user plane functions at a PHY layer, MAC layer, RLC layer, PDCP layer, SDAP layer, and PDU layer; and perform control plane functions at a PHY layer, MAC layer, RLC layer, PDCP layer, RRC layer, and a non-access stratum layer. In some embodiments, the PHY layer operations may additionally/alternatively be performed by the components of the RF interface circuitry 1308.

The baseband processor circuitry 1304A may generate or process baseband signals or waveforms that carry information in 3GPP-compatible networks. In some embodiments, the waveforms for NR may be based cyclic prefix OFDM (CP-OFDM) in the uplink or downlink, and discrete Fourier transform spread OFDM (DFT-S-OFDM) in the uplink.

The memory/storage 1312 may include one or more non-transitory, computer-readable media that includes instructions (for example, communication protocol stack 1336) that may be executed by one or more of the processors 1304 to cause the UE 1300 to perform various operations described herein. The memory/storage 1312 include any type of volatile or non-volatile memory that may be distributed throughout the UE 1300. In some embodiments, some of the memory/storage 1312 may be located on the processors 1304 themselves (for example, L1 and L2 cache), while other memory/storage 1312 is external to the processors 1304 but accessible thereto via a memory interface. The memory/storage 1312 may include any suitable volatile or non-volatile memory such as, but not limited to, dynamic random access memory (DRAM), static random access memory (SRAM), eraseable programmable read only memory (EPROM), electrically eraseable programmable read only memory (EEPROM), Flash memory, solid-state memory, or any other type of memory device technology.

The RF interface circuitry 1308 may include transceiver circuitry and radio frequency front module (RFEM) that allows the UE 1300 to communicate with other devices over a radio access network. The RF interface circuitry 1308 may include various elements arranged in transmit or receive paths. These elements may include, for example, switches, mixers, amplifiers, filters, synthesizer circuitry, control circuitry, etc.

In the receive path, the RFEM may receive a radiated signal from an air interface via antenna structure 1326 and proceed to filter and amplify (with a low-noise amplifier) the signal. The signal may be provided to a receiver of the transceiver that down-converts the RF signal into a baseband signal that is provided to the baseband processor of the processors 1304.

In the transmit path, the transmitter of the transceiver up-converts the baseband signal received from the baseband processor and provides the RF signal to the RFEM. The RFEM may amplify the RF signal through a power amplifier prior to the signal being radiated across the air interface via the antenna 1326.

In various embodiments, the RF interface circuitry 1308 may be configured to transmit/receive signals in a manner compatible with NR access technologies.

The antenna 1326 may include antenna elements to convert electrical signals into radio waves to travel through the air and to convert received radio waves into electrical signals. The antenna elements may be arranged into one or more antenna panels. The antenna 1326 may have antenna panels that are omnidirectional, directional, or a combination thereof to enable beamforming and multiple input, multiple output communications. The antenna 1326 may include microstrip antennas, printed antennas fabricated on the surface of one or more printed circuit boards, patch antennas, phased array antennas, etc. The antenna 1326 may have one or more panels designed for specific frequency bands including bands in FR1 or FR2.

The user interface circuitry 1316 includes various input/output (I/O) devices designed to enable user interaction with the UE 1300. The user interface 1316 includes input device circuitry and output device circuitry. Input device circuitry includes any physical or virtual means for accepting an input including, inter alia, one or more physical or virtual buttons (for example, a reset button), a physical keyboard, keypad, mouse, touchpad, touchscreen, microphones, scanner, headset, or the like. The output device circuitry includes any physical or virtual means for showing information or otherwise conveying information, such as sensor readings, actuator position(s), or other like information. Output device circuitry may include any number or combinations of audio or visual display, including, inter alia, one or more simple visual outputs/indicators (for example, binary status indicators such as light emitting diodes "LEDs" and multi-character visual outputs, or more complex outputs such as display devices or touchscreens (for example, liquid crystal displays (LCDs), LED displays, quantum dot displays, projectors, etc.), with the output of characters, graphics, multimedia objects, and the like being generated or produced from the operation of the UE 1300.

The sensors 1320 may include devices, modules, or subsystems whose purpose is to detect events or changes in its environment and send the information (sensor data) about the detected events to some other device, module, subsystem, etc. Examples of such sensors include, *inter alia*, inertia measurement units comprising accelerometers, gyroscopes, or magnetometers; microelectromechanical systems or nanoelectromechanical systems comprising 3-axis accelerometers, 3-axis gyroscopes, or magnetometers; level sensors; flow sensors; temperature sensors (for example, thermistors); pressure sensors; barometric pressure sensors; gravimeters; altimeters; image capture devices (for example, cameras or lensless apertures); light detection and ranging sensors; proximity sensors (for example, infrared radiation detector and the like); depth sensors; ambient light sensors; ultrasonic transceivers; microphones or other like audio capture devices; etc.

The driver circuitry 1322 may include software and hardware elements that operate to control particular devices that are embedded in the UE 1300, attached to the UE 1300, or otherwise communicatively coupled with the UE 1300. The driver circuitry 1322 may include individual drivers allowing other components to interact with or control various input/output (I/O) devices that may be present within, or connected to, the UE 1300. For example, driver circuitry 1322 may include a display driver to control and allow access to a display device, a touchscreen driver to control and allow access to a touchscreen interface, sensor drivers to obtain sensor readings of sensor circuitry 1320 and control and allow access to sensor circuitry 1320, drivers to obtain actuator positions of electro-mechanic components or control and allow access to the electro-mechanic components, a camera driver to control and allow access to an embedded image capture device, audio drivers to control and allow access to one or more audio devices.

The PMIC 1324 may manage power provided to various components of the UE 1300. In particular, with respect to the processors 1304, the PMIC 1324 may control power-source selection, voltage scaling, battery charging, or DC-to-DC conversion.

In some embodiments, the PMIC 1324 may control, or otherwise be part of, various power saving mechanisms of the UE 1300. For example, if the platform UE is in an RRC_Connected state, where it is still connected to the RAN node as it expects to receive traffic shortly, then it may enter a state known as Discontinuous Reception Mode (DRX) after a period of inactivity. During this state, the UE 1300 may power down for brief intervals of time and thus save power. If there is no data traffic activity for an extended period of time, then the UE 1300 may transition off to an RRC_Idle state, where it disconnects from the network and does not perform operations such as channel quality feedback, handover, etc. The UE 1300 goes into a very low power state and it performs paging where again it periodically wakes up to listen to the network and then powers down again. The UE 1300 may not receive data in this state; in order to receive data, it must transition back to RRC_Connected state. An additional power saving mode may allow a device to be unavailable to the network for periods longer than a paging interval (ranging from seconds to a few hours). During this time, the device is totally unreachable to the network and may power down completely. Any data sent during this time incurs a large delay and it is assumed the delay is acceptable.

A battery 1328 may power the UE 1300, although in some examples the UE 1300 may be mounted deployed in a fixed location, and may have a power supply coupled to an electrical grid. The battery 1328 may be a lithium ion battery, a metal-air battery, such as a zinc-air battery, an aluminum-air battery, a lithium-air battery, and the like. In some implementations, such as in vehicle-based applications, the battery 1328 may be a typical lead-acid automotive battery.

FIG. 14 is a block diagram of an example computing device 1400 that can implement the features and processes of FIGS. 1-12 in accordance with some embodiments. The computing device 1400 is an example of the first user device 910 (FIG. 9), the second user device 912 (FIG. 9), and/or the third user device 914 (FIG. 9). The computing device 1400 can include a memory interface 1402, one or more data processors, image processors and/or central processing units 1404, and a peripherals interface 1406. The memory interface 1402, the one or more processors 1404 and/or the peripherals interface 1406 can be separate components or can be integrated in one or more integrated circuits. The various components in the computing device 1400 can be coupled by one or more communication buses or signal lines.

Sensors, devices, and subsystems can be coupled to the peripherals interface 1406 to facilitate multiple functionalities. For example, a motion sensor 1410, a light sensor 1412, and a proximity sensor 1414 can be coupled to the peripherals interface 1406 to facilitate orientation, lighting, and proximity functions. Other sensors 1416 can also be connected to the peripherals interface 1406, such as a global navigation satellite system (GNSS) (e.g., GPS receiver), a temperature sensor, a biometric sensor, magnetometer or other sensing device, to facilitate related functionalities.

A camera subsystem 1420 and an optical sensor 1422 (e.g., a charged coupled device (CCD) or a complementary metal-oxide semiconductor (CMOS) optical sensor) can be utilized to facilitate camera functions, such as recording photographs and video clips. The camera subsystem 1420 and the optical sensor 1422 can be used to collect images of a user to be used during authentication of a user (e.g., by performing facial recognition analysis).

Communication functions can be facilitated through one or more wireless communication subsystems 1424, which can include radio frequency receivers and transmitters and/or optical (e.g., infrared) receivers and transmitters. The specific design and implementation of the communication subsystem 1424 can depend on the communication network(s) over which the computing device 1400 is intended to operate. For example, the computing device 1400 can include communication subsystems 1424 designed to operate over a GSM network, a GPRS network, an EDGE network, a Wi-Fi or WiMax network, and a Bluetooth^{™} network. In particular, the wireless communication subsystems 1424 can include protocols such that the first user device 910, the second user device 912, and/or the third user device 914 can communicate with the local server 906 (FIG. 9) and/or the remote server 902 (FIG. 9).

An audio subsystem 1426 can be coupled to a speaker 1428 and a microphone 1430 to facilitate voice-enabled functions, such as speaker recognition, voice replication, digital recording, and telephony functions. The audio subsystem 1426 can be configured to facilitate processing voice commands, voice printing and voice authentication, for example.

The I/O subsystem 1440 can include a touch-surface controller 1442 and/or other input controller(s) 1444. The touch-surface controller 1442 can be coupled to a touch surface 1446. The touch surface 1446 and touch-surface controller 1442 can, for example, detect contact and movement or break thereof using any of a plurality of touch sensitivity technologies, including, but not limited to, capacitive, resistive, infrared, and surface acoustic wave technologies, as well as other proximity sensor arrays or other elements for determining one or more points of contact with the touch surface 1446.

The other input controller(s) 1444 can be coupled to other input/control devices 1448, such as one or more buttons, rocker switches, thumbwheel, infrared port, USB port, and/or a pointer device such as a stylus. The one or more buttons (not shown) can include an up/down button for volume control of the speaker 1428 and/or the microphone 1430.

In one implementation, a pressing of the button for a first duration can disengage a lock of the touch surface 1446; and a pressing of the button for a second duration that is longer than the first duration can turn power to the computing device 1400 on or off. Pressing the button for a third duration can activate a voice control, or voice command, module that enables the user to speak commands into the microphone 1430 to cause the device to execute the spoken command. The user can customize a functionality of one or more of the buttons. The touch surface 1446 can, for example, also be used to implement virtual or soft buttons and/or a keyboard.

In some examples, the computing device 1400 can present recorded audio and/or video files, such as MP3, AAC, and MPEG files. In some examples, the computing device 1400 can include the functionality of an MP3 player, such as an iPod^{™}.

The memory interface 1402 can be coupled to memory 1450. The memory 1450 can include high-speed random-access memory and/or non-volatile memory, such as one or more magnetic disk storage devices, one or more optical storage devices, and/or flash memory (e.g., NAND, NOR). The memory 1450 can store an operating system 1452, such as Darwin, RTXC, LINUX, UNIX, OS X, WINDOWS, or an embedded operating system such as VxWorks.

The operating system 1452 can include instructions for handling basic system services and for performing hardware dependent tasks. In some examples, the operating system 1452 can be a kernel (e.g., UNIX kernel). In some examples, the operating system 1452 can include instructions for performing list generation and organization operations utilizing a machine-learning model. For example, operating system 1452 can implement the list generation and organization operations utilizing a machine-learning model features as described with reference to FIGS. 1-12.

The memory 1450 can also store communication instructions 1454 to facilitate communicating with one or more additional devices, one or more computers and/or one or more servers. The memory 1450 can include graphical user interface instructions 1456 to facilitate graphic user interface processing; sensor processing instructions 1458 to facilitate sensor-related processing and functions; phone instructions 1460 to facilitate phone-related processes and functions; electronic messaging instructions 1462 to facilitate electronic-messaging related processes and functions; web browsing instructions 1464 to facilitate web browsing-related processes and functions; media processing instructions 1466 to facilitate media processing-related processes and functions; GNSS/Navigation instructions 1468 to facilitate GNSS and navigation-related processes and instructions; and/or camera instructions 1470 to facilitate camera-related processes and functions.

The memory 1450 can store software instructions 1472 to facilitate other processes and functions, such as the list generation and organization operations utilizing a machine-learning model processes and functions as described with reference to FIGS. 1-12.

The memory 1450 can also store other software instructions 1474, such as web video instructions to facilitate web video-related processes and functions; and/or web shopping instructions to facilitate web shopping-related processes and functions. In some examples, the media processing instructions 1466 are divided into audio processing instructions and video processing instructions to facilitate audio processing-related processes and functions and video processing-related processes and functions, respectively.

Each of the above identified instructions and applications can correspond to a set of instructions for performing one or more functions described above. These instructions need not be implemented as separate software programs, procedures, or modules. The memory 1450 can include additional instructions or fewer instructions. Furthermore, various functions of the computing device 1400 can be implemented in hardware and/or in software, including in one or more signal processing and/or application specific integrated circuits.

FIG. 15 illustrates an example architecture or environment 1500 configured to implement techniques described herein in accordance with some embodiments. The architecture 1500 includes a user device 1506 (e.g., the first user device 910 (FIG. 9), the second user device 912 (FIG. 9), and/or the third user device 914 (FIG. 9)) and a service provider computer 1502 (e.g., the local server 906 (FIG. 9) and/or the remote server 902 (FIG. 9)). In some examples, the example architecture 1500 may further be configured to enable the user device 1506 and the service provider computer 1502 to share information. In some examples, the devices may be connected via one or more networks 1508 (e.g., via Bluetooth, WiFi, the Internet). In some examples, the service provider computer 1502 may be configured to implement at least some of the techniques described herein with reference to the user device 1506 and vice versa.

In some examples, the networks 1508 may include any one or a combination of many different types of networks, such as cable networks, the Internet, wireless networks, cellular networks, satellite networks, other private and/or public networks, or any combination thereof. While the illustrated example represents the user device 1506 accessing the service provider computer 1502 via the networks 1508, the described techniques may equally apply in instances where the user device 1506 interacts with the service provider computer 1502 over a landline phone, via a kiosk, or in any other manner. It is also noted that the described techniques may apply in other client/server arrangements (e.g., set-top boxes), as well as in non-client/server arrangements (e.g., locally stored applications, peer-to-peer configurations).

As noted above, the user device 1506 may be any type of computing device such as, but not limited to, a mobile phone, a smartphone, a personal digital assistant (PDA), a laptop computer, a desktop computer, a thin-client device, a tablet computer, a wearable device such as a smart watch, an electronic device in a moveable vehicle or transport device, or the like. In some examples, the user device 1506 may be in communication with the service provider computer 1502 via the network 1508, or via other network connections.

In one illustrative configuration, the user device 1506 may include at least one memory 1514 and one or more processing units (or processor(s)) 1516. The processor(s) 1516 may be implemented as appropriate in hardware, computer-executable instructions, firmware, or combinations thereof. Computer-executable instructions or firmware implementations of the processor(s) 1516 may include computer-executable or machine-executable instructions written in any suitable programming language to perform the various functions described. The user device 1506 may also include geo-location devices (e.g., a global positioning system (GPS) device or the like) for providing and/or recording geographic location information associated with the user device 1506. In some examples, the processors 1516 may include a GPU and a CPU.

The memory 1514 may store program instructions that are loadable and executable on the processor(s) 1516, as well as data generated during the execution of these programs. Depending on the configuration and type of the user device 1506, the memory 1514 may be volatile (such as random access memory (RAM)) and/or non-volatile (such as read-only memory (ROM), flash memory). The user device 1506 may also include additional removable storage and/or non-removable storage 1526 including, but not limited to, magnetic storage, optical disks, and/or tape storage. The disk drives and their associated non-transitory computer-readable media may provide non-volatile storage of computer-readable instructions, data structures, program modules, and other data for the computing devices. In some examples, the memory 1514 may include multiple different types of memory, such as static random access memory (SRAM), dynamic random access memory (DRAM), or ROM. While the volatile memory described herein may be referred to as RAM, any volatile memory that would not maintain data stored therein once unplugged from a host and/or power would be appropriate.

The memory 1514 and the additional storage 1526, both removable and non-removable, are all examples of non-transitory computer-readable storage media. For example, non-transitory computer-readable storage media may include volatile or non-volatile, removable or non-removable media implemented in any method or technology for storage of information such as computer-readable instructions, data structures, program modules, or other data. The memory 1514 and the additional storage 1526 are both examples of non-transitory computer-storage media. Additional types of computer-storage media that may be present in the user device 1506 may include, but are not limited to, phase-change RAM (PRAM), SRAM, DRAM, RAM, ROM, Electrically Erasable Programmable Read-Only Memory (EEPROM), flash memory or other memory technology, compact disc read-only memory (CD-ROM), digital video disc (DVD) or other optical storage, magnetic cassettes, magnetic tape, magnetic disk storage or other magnetic storage devices, or any other medium that can be used to store the desired information and that can be accessed by the user device 1506. Combinations of any of the above should also be included within the scope of non-transitory computer-readable storage media. Alternatively, computer-readable communication media may include computer-readable instructions, program modules, or other data transmitted within a data signal, such as a carrier wave, or other transmission. However, as used herein, computer-readable storage media does not include computer-readable communication media.

The user device 1506 may also contain communications connection(s) 1528 that allow the user device 1506 to communicate with a data store, another computing device or server, user terminals, and/or other devices via the network 1508. The user device 1506 may also include I/O device(s) 1530, such as a keyboard, a mouse, a pen, a voice input device, a touch screen input device, a display, speakers, and a printer.

Turning to the contents of the memory 1514 in more detail, the memory 1514 may include an operating system 1512 and/or one or more application programs or services for implementing the features disclosed herein such as applications 1511 (e.g., reminder application, calendar application) and map engine 1513. The techniques described with respect to FIGS. 1-12 may be performed by the map engine 1513.

The service provider computer 1502 may also be any type of computing device such as, but not limited to, a collection of virtual or "cloud" computing resources, a remote server, a mobile phone, a smartphone, a PDA, a laptop computer, a desktop computer, a thin-client device, a tablet computer, a wearable device, a server computer, or a virtual machine instance. In some examples, the service provider computer 1502 may be in communication with the user device 1506 via the network 1508, or via other network connections.

In one illustrative configuration, the service provider computer 1502 may include at least one memory 1542 and one or more processing units (or processor(s)) 1544. The processor(s) 1544 may be implemented as appropriate in hardware, computer-executable instructions, firmware, or combinations thereof. Computer-executable instructions or firmware implementations of the processor(s) 1544 may include computer-executable or machine-executable instructions written in any suitable programming language to perform the various functions described.

The memory 1542 may store program instructions that are loadable and executable on the processor(s) 1544, as well as data generated during the execution of these programs. Depending on the configuration and type of service provider computer 1502, the memory 1542 may be volatile (such as RAM) and/or non-volatile (such as ROM and flash memory). The service provider computer 1502 may also include additional removable storage and/or non-removable storage 1546 including, but not limited to, magnetic storage, optical disks, and/or tape storage. The disk drives and their associated non-transitory computer-readable media may provide non-volatile storage of computer-readable instructions, data structures, program modules, and other data for the computing devices. In some examples, the memory 1542 may include multiple different types of memory, such as SRAM, DRAM, or ROM. While the volatile memory described herein may be referred to as RAM, any volatile memory that would not maintain data stored therein, once unplugged from a host and/or power, would be appropriate. The memory 1542 and the additional storage 1546, both removable and non-removable, are both additional examples of non-transitory computer-readable storage media.

The service provider computer 1502 may also contain communications connection(s) 1548 that allow the service provider computer 1502 to communicate with a data store, another computing device or server, user terminals, and/or other devices via the network 1508. The service provider computer 1502 may also include I/O device(s) 1550, such as a keyboard, a mouse, a pen, a voice input device, a touch input device, a display, speakers, and a printer.

Turning to the contents of the memory 1542 in more detail, the memory 1542 may include an operating system 1552 and/or one or more application programs 1541 or services for implementing the features disclosed herein such as those described with reference to FIGS. 1-12.

It is well understood that the use of personally identifiable information should follow privacy policies and practices that are generally recognized as meeting or exceeding industry or governmental requirements for maintaining the privacy of users. In particular, personally identifiable information data should be managed and handled so as to minimize risks of unintentional or unauthorized access or use, and the nature of authorized use should be clearly indicated to users.

For one or more embodiments, at least one of the components set forth in one or more of the preceding figures may be configured to perform one or more operations, techniques, processes, or methods as set forth in the example section below. For example, the baseband circuitry as described above in connection with one or more of the preceding figures may be configured to operate in accordance with one or more of the examples set forth below. For another example, circuitry associated with a UE, base station, network element, etc. as described above in connection with one or more of the preceding figures may be configured to operate in accordance with one or more of the examples set forth below in the example section.

In some embodiments, some or all of the operations described herein can be performed using an application executing on the user's device. Circuits, logic modules, processors, and/or other components may be configured to perform various operations described herein. Those skilled in the art will appreciate that, depending on implementation, such configuration can be accomplished through design, setup, interconnection, and/or programming of the particular components and that, again depending on implementation, a configured component might or might not be reconfigurable for a different operation. For example, a programmable processor can be configured by providing suitable executable code; a dedicated logic circuit can be configured by suitably connecting logic gates and other circuit elements; and so on.

As described above, one aspect of the present technology is the gathering, sharing, and use of data, including an authentication tag and data from which the tag is derived. The present disclosure contemplates that, in some instances, this gathered data may include personal information data that uniquely identifies or can be used to contact or locate a specific person. Such personal information data can include demographic data, location-based data, telephone numbers, email addresses, twitter ID's, home addresses, data or records relating to a user's health or level of fitness (e.g., vital signs measurements, medication information, exercise information), date of birth, or any other identifying or personal information.

The present disclosure recognizes that the use of such personal information data, in the present technology, can be used to the benefit of users. For example, the personal information data can be used to authenticate another device, and vice versa to control which device ranging operations may be performed. Further, other uses for personal information data that benefit the user are also contemplated by the present disclosure. For instance, health and fitness data may be shared to provide insights into a user's general wellness, or may be used as positive feedback to individuals using technology to pursue wellness goals.

The present disclosure contemplates that the entities responsible for the collection, analysis, disclosure, transfer, storage, or other use of such personal information data will comply with well-established privacy policies and/or privacy practices. In particular, such entities should implement and consistently use privacy policies and practices that are generally recognized as meeting or exceeding industry or governmental requirements for maintaining personal information data private and secure. Such policies should be easily accessible by users, and should be updated as the collection and/or use of data changes. Personal information from users should be collected for legitimate and reasonable uses of the entity and not shared or sold outside of those legitimate uses. Further, such collection/sharing should occur after receiving the informed consent of the users. Additionally, such entities should consider taking any needed steps for safeguarding and securing access to such personal information data and ensuring that others with access to the personal information data adhere to their privacy policies and procedures. Further, such entities can subject themselves to evaluation by third parties to certify their adherence to widely accepted privacy policies and practices. In addition, policies and practices should be adapted for the particular types of personal information data being collected and/or accessed and adapted to applicable laws and standards, including jurisdiction-specific considerations. For instance, in the US, collection of or access to certain health data may be governed by federal and/or state laws, such as the Health Insurance Portability and Accountability Act (HIPAA); whereas health data in other countries may be subject to other regulations and policies and should be handled accordingly. Hence, different privacy practices should be maintained for different personal data types in each country.

Despite the foregoing, the present disclosure also contemplates embodiments in which users selectively block the use of, or access to, personal information data. That is, the present disclosure contemplates that hardware and/or software elements can be provided to prevent or block access to such personal information data. For example, in the case of sharing content and performing ranging, the present technology can be configured to allow users to select to "opt in" or "opt out" of participation in the collection of personal information data during registration for services or anytime thereafter. In addition to providing "opt in" and "opt out" options, the present disclosure contemplates providing notifications relating to the access or use of personal information. For instance, users may be notified upon downloading an app that their personal information data will be accessed and then reminded again just before personal information data is accessed by the app.

Moreover, it is the intent of the present disclosure that personal information data should be managed and handled in a way to minimize risks of unintentional or unauthorized access or use. Risk can be minimized by limiting the collection of data and deleting data once it is no longer needed. In addition, and when applicable, including in certain health related applications, data de-identification can be used to protect a user's privacy. De-identification may be facilitated, when appropriate, by removing specific identifiers (e.g., date of birth, etc.), controlling the amount or specificity of data stored (e.g., collecting location data at a city level rather than at an address level), controlling how data is stored (e.g., aggregating data across users), and/or other methods.

Therefore, although the present disclosure broadly covers use of personal information data to implement one or more various disclosed embodiments, the present disclosure also contemplates that the various embodiments can also be implemented without the need for accessing such personal information data. That is, the various embodiments of the present technology are not rendered inoperable due to the lack of all or a portion of such personal information data.

In some examples, "circuitry" can refer to, be part of, or include hardware components such as an electronic circuit, a logic circuit, a processor (shared, dedicated, or group) or memory (shared, dedicated, or group), an application specific integrated circuit (ASIC), a field-programmable device (FPD) (e.g., a field-programmable gate array (FPGA), a programmable logic device (PLD), a complex PLD (CPLD), a high-capacity PLD (HCPLD), a structured ASIC, or a programmable system-on-a-chip (SoC)), digital signal processors (DSPs), etc., that are configured to provide the described functionality. In some embodiments, the circuitry may execute one or more software or firmware programs to provide at least some of the described functionality. The term "circuitry" may also refer to a combination of one or more hardware elements (or a combination of circuits used in an electrical or electronic system) with the program code used to carry out the functionality of that program code. In these embodiments, the combination of hardware elements and program code may be referred to as a particular type of circuitry.

The term "processor circuitry" as used herein refers to, is part of, or includes circuitry capable of sequentially and automatically carrying out a sequence of arithmetic or logical operations, or recording, storing, or transferring digital data. The term "processor circuitry" may refer an application processor, baseband processor, a central processing unit (CPU), a graphics processing unit, a single-core processor, a dual-core processor, a triple-core processor, a quad-core processor, or any other device capable of executing or otherwise operating computer-executable instructions, such as program code, software modules, or functional processes.

The term "interface circuitry" as used herein refers to, is part of, or includes circuitry that enables the exchange of information between two or more components or devices. The term "interface circuitry" may refer to one or more hardware interfaces, for example, buses, I/O interfaces, peripheral component interfaces, network interface cards, or the like.

The term "user equipment" or "UE" as used herein refers to a device with radio communication capabilities and may describe a remote user of network resources in a communications network. The term "user equipment" or "UE" may be considered synonymous to, and may be referred to as, client, mobile, mobile device, mobile terminal, user terminal, mobile unit, mobile station, mobile user, subscriber, user, remote station, access agent, user agent, receiver, radio equipment, reconfigurable radio equipment, reconfigurable mobile device, etc. Furthermore, the term "user equipment" or "UE" may include any type of wireless/wired device or any computing device including a wireless communications interface.

The term "computer system" as used herein refers to any type interconnected electronic devices, computer devices, or components thereof. Additionally, the term "computer system" or "system" may refer to various components of a computer that are communicatively coupled with one another. Furthermore, the term "computer system" or "system" may refer to multiple computer devices or multiple computing systems that are communicatively coupled with one another and configured to share computing or networking resources.

The term "resource" as used herein refers to a physical or virtual device, a physical or virtual component within a computing environment, or a physical or virtual component within a particular device, such as computer devices, mechanical devices, memory space, processor/CPU time, processor/CPU usage, processor and accelerator loads, hardware time or usage, electrical power, input/output operations, ports or network sockets, channel/link allocation, throughput, memory usage, storage, network, database and applications, workload units, or the like. A "hardware resource" may refer to compute, storage, or network resources provided by physical hardware element(s). A "virtualized resource" may refer to compute, storage, or network resources provided by virtualization infrastructure to an application, device, system, etc. The term "network resource" or "communication resource" may refer to resources that are accessible by computer devices/systems via a communications network. The term "system resources" may refer to any kind of shared entities to provide services, and may include computing or network resources. System resources may be considered as a set of coherent functions, network data objects or services, accessible through a server where such system resources reside on a single host or multiple hosts and are clearly identifiable.

The term "channel" as used herein refers to any transmission medium, either tangible or intangible, which is used to communicate data or a data stream. The term "channel" may be synonymous with or equivalent to "communications channel," "data communications channel," "transmission channel," "data transmission channel," "access channel," "data access channel," "link," "data link," "carrier," "radio-frequency carrier," or any other like term denoting a pathway or medium through which data is communicated. Additionally, the term "link" as used herein refers to a connection between two devices for the purpose of transmitting and receiving information.

The terms "instantiate," "instantiation," and the like as used herein refers to the creation of an instance. An "instance" also refers to a concrete occurrence of an object, which may occur, for example, during execution of program code.

The term "connected" may mean that two or more elements, at a common communication protocol layer, have an established signaling relationship with one another over a communication channel, link, interface, or reference point.

The term "network element" as used herein refers to physical or virtualized equipment or infrastructure used to provide wired or wireless communication network services. The term "network element" may be considered synonymous to or referred to as a networked computer, networking hardware, network equipment, network node, virtualized network function, or the like.

The term "information element" refers to a structural element containing one or more fields. The term "field" refers to individual contents of an information element, or a data element that contains content. An information element may include one or more additional information elements.

Although the present disclosure has been described with respect to specific embodiments, it will be appreciated that the disclosure is intended to cover all modifications and equivalents within the scope of the following claims.

All patents, patent applications, publications, and descriptions mentioned herein are incorporated by reference in their entirety for all purposes. None is admitted to be prior art.

The specification and drawings are, accordingly, to be regarded in an illustrative rather than a restrictive sense. It will, however, be evident that various modifications and changes may be made thereunto without departing from the broader spirit and scope of the disclosure as set forth in the claims.

Other variations are within the spirit of the present disclosure. Thus, while the disclosed techniques are susceptible to various modifications and alternative constructions, certain illustrated embodiments thereof are shown in the drawings and have been described above in detail. It should be understood, however, that there is no intention to limit the disclosure to the specific form or forms disclosed, but on the contrary, the intention is to cover all modifications, alternative constructions and equivalents falling within the spirit and scope of the disclosure, as defined in the appended claims.

The use of the terms "a" and "an" and "the" and similar referents in the context of describing the disclosed embodiments (especially in the context of the following claims) are to be construed to cover both the singular and the plural, unless otherwise indicated herein or clearly contradicted by context. The terms "comprising," "having," "including," and "containing" are to be construed as open-ended terms (i.e., meaning "including, but not limited to,") unless otherwise noted. The term "connected" is to be construed as partly or wholly contained within, attached to, or joined together, even if there is something intervening. The phrase "based on" should be understood to be open-ended, and not limiting in any way, and is intended to be interpreted or otherwise read as "based at least in part on," where appropriate. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of all examples, or exemplary language (e.g., "such as") provided herein, is intended merely to better illuminate embodiments of the disclosure and does not pose a limitation on the scope of the disclosure unless otherwise claimed. No language in the specification should be construed as indicating any non-claimed element as essential to the practice of the disclosure. The use of "or" is intended to mean an "inclusive or," and not an "exclusive or," unless specifically indicated to the contrary. Reference to a "first" component does not necessarily require that a second component be provided. Moreover, reference to a "first" or a "second" component does not limit the referenced component to a particular location unless expressly stated. The term "based on" is intended to mean "based at least in part on."

Disjunctive language such as the phrase "at least one of X, Y, or Z," unless specifically stated otherwise, is otherwise understood within the context as used in general to present that an item, term, etc., may be either X, Y, or Z, or any combination thereof (e.g., X, Y, and/or Z). Thus, such disjunctive language is not generally intended to, and should not, imply that certain embodiments require at least one of X, at least one of Y, or at least one of Z to each be present. Additionally, conjunctive language such as the phrase "at least one of X, Y, and Z," unless specifically stated otherwise, should also be understood to mean X, Y, Z, or any combination thereof, including "X, Y, and/or Z."

Preferred embodiments of this disclosure are described herein, including the best mode known to the inventors for carrying out the disclosure. Variations of those preferred embodiments may become apparent to those of ordinary skill in the art upon reading the foregoing description. The inventors expect skilled artisans to employ such variations as appropriate, and the inventors intend for the disclosure to be practiced otherwise than as specifically described herein. Accordingly, this disclosure includes all modifications and equivalents of the subject matter recited in the claims appended hereto as permitted by applicable law. Moreover, any combination of the above-described elements in all possible variations thereof is encompassed by the disclosure unless otherwise indicated herein or otherwise clearly contradicted by context.

All references, including publications, patent applications, and patents, cited herein are hereby incorporated by reference to the same extent as if each reference were individually and specifically indicated to be incorporated by reference and were set forth in its entirety herein.

The specific details of particular embodiments may be combined in any suitable manner or varied from those shown and described herein without departing from the spirit and scope of embodiments of the described techniques.

The above description of exemplary embodiments of the described techniques has been presented for the purposes of illustration and description. It is not intended to be exhaustive or to limit the described techniques to the precise form described, and many modifications and variations are possible in light of the teaching above. The embodiments were chosen and described in order to best explain the principles of the described techniques and its practical applications to thereby enable others skilled in the art to best utilize the described techniques in various embodiments and with various modifications as are suited to the particular use contemplated.

All publications, patents, and patent applications cited herein are hereby incorporated by reference in their entirety for all purposes.

### Examples

In the following sections, further exemplary embodiments are provided.

Example 1 may include one or more non-transitory computer-readable media having instructions stored thereon that, when executed by one or more processors of a device, cause the one or more processors to generate a representation of a list of items in a user interface for displaying the list within an application on the device, receive an input value to be included as an item in the list, identify a machine-learning model corresponding to the list from one or more machine-learning models for one or more lists, determine, using the identified machine-learning model, a classification for the input value, assign the input value to the classification within the application, and update the representation of the list of items to include the item corresponding to the input value in the list.

Example 2 may include the one or more non-transitory computer-readable media of example 1, wherein the classification is a first classification, and wherein the instructions, when executed by the one or more processors, further cause the one or more processors to identify a user input that reassigns the item from the first classification to a second classification, and update the machine-learning model to have the item assigned to the second classification.

Example 3 may include the one or more non-transitory computer-readable media of example 2, wherein the instructions, when executed by the one or more processors, further cause the one or more processors to provide at least a portion of the machine-learning model to a remote device to update a corresponding account-specific machine-learning model stored on the remote device, the corresponding account-specific machine-learning model stored on the remote device to be utilized for updating machine-learning models on one or more devices associated with a user account corresponding to the account-specific machine-learning model.

Example 4 may include the one or more non-transitory computer-readable media of example 1, wherein to determine the classification for the input value comprises to determine, using the identified machine-learning model, a possible classification for the input value, present, in the user interface, the possible classification for the input value, receive, via the user interface, an input associated with the item, determine whether the input associated with the item is an acceptance of the possible classification for the item or an assignment of a different classification for the item, in accordance with a determination that the input associated with the item is acceptance of the possible classification, determine that the classification is the possible classification, and in accordance with a determination that the input associated with the item is the assignment of the different classification, determine that the classification is the different classification.

Example 5 may include the one or more non-transitory computer-readable media of example 1, wherein the instructions, when executed by the one or more processors, further cause the one or more processors to present, within the user interface, the item in a section of the list corresponding to the classification based at least in part on the input value being assigned to the classification.

Example 6 may include the one or more non-transitory computer-readable media of example 1, wherein the instructions, when executed by the one or more processors, further cause the one or more processors to determine a grouping for the input value using the machine-learning model, the grouping indicating a location where a good corresponding to the item can be obtained, and present, in the user interface, the item with an indication of the grouping based at least in part on the determination of the grouping.

Example 7 may include the one or more non-transitory computer-readable media of example 6, wherein the grouping corresponds to a section of the location, and wherein the indication of the grouping comprises an indication of the section of the location.

Example 8 may include the one or more non-transitory computer-readable media of example 1, wherein the machine-learning model is associated with a first user account, and wherein the instructions, when executed by the one or more processors, further cause the one or more processors to identify an indication to share the machine-learning model with a second user account, and provide an indication to a remote device to share the machine-learning model with the second user account.

Example 9 may include the one or more non-transitory computer-readable media of example 1, wherein to determine the classification for the input value comprises to tokenize the input value into one or more words, filter the one or more words to one or more nouns or verbs, vectorize the one or more nouns or verbs to produce one or more vectors corresponding to the input value, and compare the one or more vectors with spheres corresponding to one or more classifications within a vector space to determine the classification.

Example 10 may include the one or more non-transitory computer-readable media of example 9, wherein to determine the classification for the input value further comprises to determine that a first portion of the one or more vectors correspond to a first sphere corresponding to a first classification based at least in part on the comparison of the one or more vectors with the spheres, determine that a second portion of the one or more vectors correspond to a second sphere corresponding to a second classification based at least in part on the comparison of the one or more vectors with the spheres, determine a first priority assigned to the first sphere and a second priority assigned to the second sphere, and determine that the classification for the input value is the first classification based at least in part on the first priority and the second priority.

Example 11 may include a method, comprising generating, by a device, a representation of a list of items in a user interface for displaying the list within an application on the device, receiving, by the device, an input value to be included as an item in the list, identifying, by the device, a machine-learning model corresponding to the list from one or more machine-learning models for one or more lists, determining, by the device using the identified machine-learning model, a classification for the input value, assigning, by the device, the input value to the classification within the application, and updating, by the device, the representation of the list of items to include the item corresponding to the input value in the list.

Example 12 may include the method of example 11, wherein the classification is a first classification, and wherein the method further comprises identifying, by the device, a user input that reassigns the item from the first classification to a second classification, and updating, by the device, the machine-learning model to have the item assigned to the second classification.

Example 13 may include the method of example 12, further comprising providing, by the device, at least a portion of the machine-learning model to a remote device to update a corresponding account-specific machine-learning model stored on the remote device, the corresponding account-specific machine-learning model stored on the remote device to be utilized for updating machine-learning models on one or more devices associated with a user account corresponding to the account-specific machine-learning model.

Example 14 may include the method of example 11, wherein determining the classification for the input value comprises determining, using the identified machine-learning model, a possible classification for the input value, presenting, in the user interface, the possible classification for the input value, receiving, via the user interface, an input associated with the item, determining whether the input associated with the item is an acceptance of the possible classification for the item or an assignment of a different classification for the item, in accordance with a determination that the input associated with the item is acceptance of the possible classification, determining that the classification is the possible classification, and in accordance with a determination that the input associated with the item is the assignment of the different classification, determining that the classification is the different classification.

Example 15 may include the method of example 11, further comprising presenting, by the device within the user interface, the item in a section of the list corresponding to the classification based at least in part on the input value being assigned to the classification.

Example 16 may include the method of example 11, wherein the machine-learning model is associated with a first user account, and wherein the method further comprises identifying, by the device, an indication to share the machine-learning model with a second user account, and providing, by the device an indication to a remote device to share the machine-learning model with the second user account.

Example 17 may include a device, comprising memory to store one or more machine-learning models, and one or more processors coupled to the memory, the one or more processors to generate a representation of a list of items in a user interface for displaying the list within an application on the device, receive an input value to be included as an item in the list, identify a machine-learning model corresponding to the list from the one or more machine-learning models for one or more lists, determine, using the identified machine-learning model, a classification for the input value, assign the input value to the classification within the application, and update the representation of the list of items to include the item corresponding to the input value in the list.

Example 18 may include the device of example 17, wherein the one or more processors are further to determine a grouping for the input value using the machine-learning model, the grouping indicating a location where a good corresponding to the item can be obtained, and present, in the user interface, the item with an indication of the grouping based at least in part on the determination of the grouping.

Example 19 may include the device of example 17, wherein to determine the classification for the input value comprises to tokenize the input value into one or more words, filter the one or more words to one or more nouns or verbs, vectorize the one or more nouns or verbs to produce one or more vectors corresponding to the input value, and compare the one or more vectors with spheres corresponding to one or more classifications within a vector space to determine the classification.

Example 20 may include the device of example 19, wherein to determine the classification for the input value further comprises to determine that a first portion of the one or more vectors correspond to a first sphere corresponding to a first classification based at least in part on the comparison of the one or more vectors with the spheres, determine that a second portion of the one or more vectors correspond to a second sphere corresponding to a second classification based at least in part on the comparison of the one or more vectors with the spheres, determine a first priority assigned to the first sphere and a second priority assigned to the second sphere, and determine that the classification for the input value is the first classification based at least in part on the first priority and the second priority.

Any of the above-described examples may be combined with any other example (or combination of examples), unless explicitly stated otherwise. The foregoing description of one or more implementations provides illustration and description, but is not intended to be exhaustive or to limit the scope of embodiments to the precise form disclosed. Modifications and variations are possible in light of the above teachings or may be acquired from practice of various embodiments.

Exemplary non-transitory computer-readable media, methods, and devices are set out in the following items:
1. One or more non-transitory computer-readable media having instructions stored thereon that, when executed by one or more processors of a device, cause the one or more processors to:
   generate a representation of a list of items in a user interface for displaying the list within an application on the device;
   receive an input value to be included as an item in the list;
   identify a machine-learning model corresponding to the list from one or more machine-learning models for one or more lists;
   determine, using the identified machine-learning model, a classification for the input value;
   assign the input value to the classification within the application; and
   update the representation of the list of items to include the item corresponding to the input value in the list.
2. The one or more non-transitory computer-readable media of item 1, wherein the classification is a first classification, and wherein the instructions, when executed by the one or more processors, further cause the one or more processors to:
   identify a user input that reassigns the item from the first classification to a second classification; and
   update the machine-learning model to have the item assigned to the second classification.
3. The one or more non-transitory computer-readable media of item 2, wherein the instructions, when executed by the one or more processors, further cause the one or more processors to:
   provide at least a portion of the machine-learning model to a remote device to update a corresponding account-specific machine-learning model stored on the remote device, the corresponding account-specific machine-learning model stored on the remote device to be utilized for updating machine-learning models on one or more devices associated with a user account corresponding to the account-specific machine-learning model.
4. The one or more non-transitory computer-readable media of any of items 1-3, wherein to determine the classification for the input value comprises to:
   determine, using the identified machine-learning model, a possible classification for the input value;
   present, in the user interface, the possible classification for the input value;
   receive, via the user interface, an input associated with the item;
   determine whether the input associated with the item is an acceptance of the possible classification for the item or an assignment of a different classification for the item;
   in accordance with a determination that the input associated with the item is acceptance of the possible classification, determine that the classification is the possible classification; and
   in accordance with a determination that the input associated with the item is the assignment of the different classification, determine that the classification is the different classification.
5. The one or more non-transitory computer-readable media of any of items 1-4, wherein:
   the instructions, when executed by the one or more processors, further cause the one or more processors to:
      present, within the user interface, the item in a section of the list corresponding to the classification based at least in part on the input value being assigned to the classification; or
   the instructions, when executed by the one or more processors, further cause the one or more processors to:
      determine a grouping for the input value using the machine-learning model, the grouping indicating a location where a good corresponding to the item can be obtained; and
      present, in the user interface, the item with an indication of the grouping based at least in part on the determination of the grouping.
6. The one or more non-transitory computer-readable media of any of items 1-5, wherein to determine the classification for the input value comprises to:
   tokenize the input value into one or more words;
   filter the one or more words to one or more nouns or verbs;
   vectorize the one or more nouns or verbs to produce one or more vectors corresponding to the input value; and
   compare the one or more vectors with spheres corresponding to one or more classifications within a vector space to determine the classification.
7. A method, comprising:
   generating, by a device, a representation of a list of items in a user interface for displaying the list within an application on the device;
   receiving, by the device, an input value to be included as an item in the list;
   identifying, by the device, a machine-learning model corresponding to the list from one or
   more machine-learning models for one or more lists;
   determining, by the device using the identified machine-learning model, a classification for the input value;
   assigning, by the device, the input value to the classification within the application; and
   updating, by the device, the representation of the list of items to include the item corresponding to the input value in the list.
8. The method of item 7, wherein the classification is a first classification, and wherein the method further comprises:
   identifying, by the device, a user input that reassigns the item from the first classification to a second classification; and
   updating, by the device, the machine-learning model to have the item assigned to the second classification.
9. The method of item 8, further comprising:
   providing, by the device, at least a portion of the machine-learning model to a remote device to update a corresponding account-specific machine-learning model stored on the remote device, the corresponding account-specific machine-learning model stored on the remote device to be utilized for updating machine-learning models on one or more devices associated with a user account corresponding to the account-specific machine-learning model.
10. The method of any of items 7-9, wherein determining the classification for the input value comprises:
   determining, using the identified machine-learning model, a possible classification for the input value;
   presenting, in the user interface, the possible classification for the input value;
   receiving, via the user interface, an input associated with the item;
   determining whether the input associated with the item is an acceptance of the possible classification for the item or an assignment of a different classification for the item;
   in accordance with a determination that the input associated with the item is acceptance of the possible classification, determining that the classification is the possible classification; and
   in accordance with a determination that the input associated with the item is the assignment of the different classification, determining that the classification is the different classification.
11. The method of any of items 7-10, wherein:
   the method further comprises:
   presenting, by the device within the user interface, the item in a section of the list corresponding to the classification based at least in part on the input value being assigned to the classification; or
   the machine-learning model is associated with a first user account, and the method further comprises:
      identifying, by the device, an indication to share the machine-learning model with a second user account; and
      providing, by the device an indication to a remote device to share the machine-learning model with the second user account.
12. A device, comprising:
   memory to store one or more machine-learning models; and
   one or more processors coupled to the memory, the one or more processors to:
      generate a representation of a list of items in a user interface for displaying the list within an application on the device;
      receive an input value to be included as an item in the list;
      identify a machine-learning model corresponding to the list from the one or more machine-learning models for one or more lists;
      determine, using the identified machine-learning model, a classification for the input value;
      assign the input value to the classification within the application; and
      update the representation of the list of items to include the item corresponding to the input value in the list.
13. The device of item 12, wherein the one or more processors are further to:
   determine a grouping for the input value using the machine-learning model, the grouping indicating a location where a good corresponding to the item can be obtained; and
   present, in the user interface, the item with an indication of the grouping based at least in part on the determination of the grouping.
14. The device of any of item 12 or item 13, wherein to determine the classification for the input value comprises to:
   tokenize the input value into one or more words;
   filter the one or more words to one or more nouns or verbs;
   vectorize the one or more nouns or verbs to produce one or more vectors corresponding to the input value; and
   compare the one or more vectors with spheres corresponding to one or more classifications within a vector space to determine the classification.
15. The device of item 14, wherein to determine the classification for the input value further comprises to:
   determine that a first portion of the one or more vectors correspond to a first sphere corresponding to a first classification based at least in part on the comparison of the one or more vectors with the spheres;
   determine that a second portion of the one or more vectors correspond to a second sphere corresponding to a second classification based at least in part on the comparison of the one or more vectors with the spheres;
   determine a first priority assigned to the first sphere and a second priority assigned to the second sphere; and
   determine that the classification for the input value is the first classification based at least in part on the first priority and the second priority.

Although the embodiments above have been described in considerable detail, numerous variations and modifications will become apparent to those skilled in the art once the above disclosure is fully appreciated. It is intended that the following claims be interpreted to embrace all such variations and modifications.

The foregoing description, for purpose of explanation, has been described with reference to specific embodiments. However, the illustrative discussions above are not intended to be exhaustive or to limit the invention to the precise forms disclosed. Many modifications and variations are possible in view of the above teachings. The embodiments were chosen and described in order to best explain the principles of the invention and its practical applications, to thereby enable others skilled in the art tobest utilize the invention and various embodiments with various modifications as are suited to the particular use contemplated.

## Claims

1. One or more non-transitory computer-readable media having instructions stored thereon that, when executed by one or more processors of a device, cause the one or more processors to:
generate a representation of a list of items in a user interface for displaying the list within an application on the device;
receive an input value to be included as an item in the list;
identify a machine-learning model corresponding to the list from one or more machine-learning models for one or more lists;
determine, using the identified machine-learning model, a classification for the input value;
assign the input value to the classification within the application; and
update the representation of the list of items to include the item corresponding to the input value in the list.

2. The one or more non-transitory computer-readable media of claim 1, wherein the classification is a first classification, and wherein the instructions, when executed by the one or more processors, further cause the one or more processors to:
identify a user input that reassigns the item from the first classification to a second classification; and
update the machine-learning model to have the item assigned to the second classification.

3. The one or more non-transitory computer-readable media of claim 2, wherein the instructions, when executed by the one or more processors, further cause the one or more processors to:
provide at least a portion of the machine-learning model to a remote device to update a corresponding account-specific machine-learning model stored on the remote device, the corresponding account-specific machine-learning model stored on the remote device to be utilized for updating machine-learning models on one or more devices associated with a user account corresponding to the account-specific machine-learning model.

4. The one or more non-transitory computer-readable media of any of claims 1-3, wherein to determine the classification for the input value comprises to:
determine, using the identified machine-learning model, a possible classification for the input value;
present, in the user interface, the possible classification for the input value;
receive, via the user interface, an input associated with the item;
determine whether the input associated with the item is an acceptance of the possible classification for the item or an assignment of a different classification for the item;
in accordance with a determination that the input associated with the item is acceptance of the possible classification, determine that the classification is the possible classification; and
in accordance with a determination that the input associated with the item is the assignment of the different classification, determine that the classification is the different classification.

5. The one or more non-transitory computer-readable media of any of claims 1-4, wherein:
the instructions, when executed by the one or more processors, further cause the one or more processors to:
present, within the user interface, the item in a section of the list corresponding to the classification based at least in part on the input value being assigned to the classification; or
the instructions, when executed by the one or more processors, further cause the one or more processors to:
determine a grouping for the input value using the machine-learning model, the grouping indicating a location where a good corresponding to the item can be obtained; and
present, in the user interface, the item with an indication of the grouping based at least in part on the determination of the grouping.

6. The one or more non-transitory computer-readable media of any of claims 1-5, wherein to determine the classification for the input value comprises to:
tokenize the input value into one or more words;
filter the one or more words to one or more nouns or verbs;
vectorize the one or more nouns or verbs to produce one or more vectors corresponding to the input value; and
compare the one or more vectors with spheres corresponding to one or more classifications within a vector space to determine the classification.

7. A method, comprising:
generating, by a device, a representation of a list of items in a user interface for displaying the list within an application on the device;
receiving, by the device, an input value to be included as an item in the list;
identifying, by the device, a machine-learning model corresponding to the list from one or more machine-learning models for one or more lists;
determining, by the device using the identified machine-learning model, a classification for the input value;
assigning, by the device, the input value to the classification within the application; and
updating, by the device, the representation of the list of items to include the item corresponding to the input value in the list.

8. The method of claim 7, wherein the classification is a first classification, and wherein the method further comprises:
identifying, by the device, a user input that reassigns the item from the first classification to a second classification; and
updating, by the device, the machine-learning model to have the item assigned to the second classification.

9. The method of claim 8, further comprising:
providing, by the device, at least a portion of the machine-learning model to a remote device to update a corresponding account-specific machine-learning model stored on the remote device, the corresponding account-specific machine-learning model stored on the remote device to be utilized for updating machine-learning models on one or more devices associated with a user account corresponding to the account-specific machine-learning model.

10. The method of any of claims 7-9, wherein determining the classification for the input value comprises:
determining, using the identified machine-learning model, a possible classification for the input value;
presenting, in the user interface, the possible classification for the input value;
receiving, via the user interface, an input associated with the item;
determining whether the input associated with the item is an acceptance of the possible classification for the item or an assignment of a different classification for the item;
in accordance with a determination that the input associated with the item is acceptance of the possible classification, determining that the classification is the possible classification; and
in accordance with a determination that the input associated with the item is the assignment of the different classification, determining that the classification is the different classification.

11. The method of any of claims 7-10, wherein:
the method further comprises:
presenting, by the device within the user interface, the item in a section of the list corresponding to the classification based at least in part on the input value being assigned to the classification; or
the machine-learning model is associated with a first user account, and the method further comprises:
identifying, by the device, an indication to share the machine-learning model with a second user account; and
providing, by the device an indication to a remote device to share the machine-learning model with the second user account.

12. A device, comprising:
memory to store one or more machine-learning models; and
one or more processors coupled to the memory, the one or more processors to:
generate a representation of a list of items in a user interface for displaying the list within an application on the device;
receive an input value to be included as an item in the list;
identify a machine-learning model corresponding to the list from the one or more machine-learning models for one or more lists;
determine, using the identified machine-learning model, a classification for the input value;
assign the input value to the classification within the application; and
update the representation of the list of items to include the item corresponding to the input value in the list.

13. The device of claim 12, wherein the one or more processors are further to:
determine a grouping for the input value using the machine-learning model, the grouping indicating a location where a good corresponding to the item can be obtained; and
present, in the user interface, the item with an indication of the grouping based at least in part on the determination of the grouping.

14. The device of any of claim 12 or claim 13, wherein to determine the classification for the input value comprises to:
tokenize the input value into one or more words;
filter the one or more words to one or more nouns or verbs;
vectorize the one or more nouns or verbs to produce one or more vectors corresponding to the input value; and
compare the one or more vectors with spheres corresponding to one or more classifications within a vector space to determine the classification.

15. The device of claim 14, wherein to determine the classification for the input value further comprises to:
determine that a first portion of the one or more vectors correspond to a first sphere corresponding to a first classification based at least in part on the comparison of the one or more vectors with the spheres;
determine that a second portion of the one or more vectors correspond to a second sphere corresponding to a second classification based at least in part on the comparison of the one or more vectors with the spheres;
determine a first priority assigned to the first sphere and a second priority assigned to the second sphere; and
determine that the classification for the input value is the first classification based at least in part on the first priority and the second priority.
